# EUROPEAN PATENT SPECIFICATION

(11) **EP 1 347 942 B1**
(45) Date of publication and mention of the grant of the patent: **05.12.2012**
(21) Application number: 01982706.2
(22) Date of filing: 23.10.2001
(51) Int. Cl.: C02F 3/06, C02F 3/28

(54) **DEVICE FOR TREATMENT OF WASTEWATER**
VORRICHTUNG ZUR BEHANDLUNG VON ABWASSER
DISPOSITIF DESTINE AU TRAITEMENT DES EAUX USEES

(43) Date of publication of application: 01.10.2003
(73) Proprietor: Council of Scientific and Industrial Research, New Delhi 110 001 (IN)
(72) Inventor: HARIDAS, Ajit, Regional Research Laboratory (CSIR), Kerala (IN)
(74) Representative: Manaton, Ross Timothy
(86) International application number: PCT/IN2001/000192
(87) International publication number: WO 2003/035560

(56) References cited:
- US-A- 4 613 434
- US-A- 5 232 586
- US-A- 5 690 824
- US-A- 5 770 080
- US-B1- 6 177 004

## Description

### Field of the invention

The present invention relates to a device for treatment of wastewater. More particularly, the present invention relates to a device for the removal of biodegradable contaminants from wastewater using biological processes. The present invention also relates to a system for purifying highly contaminated water which contains a large amount of suspended solid impurities (TSS) and high concentrations of BOD (biochemical oxygen demand) and COD (chemical oxygen demand) as, for example, effluents from food processing plants and toilets. The device enables the efficient removal of biodegradable solid substances from wastewater by a combination of filtration and biochemical reaction. In other words, this invention relates to a bioreactor device that enables both biological degradation and the filtration of suspended solids.

### Background of the invention

The treatment of wastewater for the removal of substances that cause BOD is best accomplished by biological treatment methods such as aerobic degradation and anaerobic degradation. There is a wide range of industrial operations that result in liquid effluents containing substantial amounts PBOD, which has to be removed to conform to national discharge regulations. In addition, several of these high-BOD industrial effluents, have substantial quantities of BOD present as suspended solid material.

In general, examples of BOD exerting suspended solids include, but are not limited to, partially dissolved and partially macromolecular materials, such as proteins, long-chain fatty acids, fats, vegetable oils, tallow, bacterial and yeast cell-walls, celluloses, hemicelluloses, and starch; the suspended solids being present in emulsified, suspended or colloidal state. Effluents of this nature are discharged for example, from slaughterhouses, dairies, rendering plants, oil mills, pharmaceutical and organochemical plants, pulp and paper factories.

The relevant organic compounds constituting biodegradable solid organic matter are generally classified as 1) Polysaccharides common among which are cellulose, hemicellulose, starch and pectin 2) Proteins and amino acids which are present as insoluble matter when coagulated by heat, acids or tannins and 3) Fats and long chain fatty acids. All these compounds can be degraded by anaerobic micro-organisms to form methane. The first step in the degradation process is called solubilization which results in the formation of soluble compounds and is carried out by enzyme action outside of the microbial cell. This is a slow process and requires sufficient microbial cells producing the enzymes and sufficient contacting time between enzyme and solids. In fact, the solubilization step is most often the rate limiting step in the sequence of anaerobic reactions that result in mineralisation of the polluting substances.

The development of high-rate anaerobic reactors, anaerobic treatment has become the economic option in the pretreatment of high BOD industrial effluents. However, high-rate reactors can be used only for the treatment of industrial effluent with BOD in primarily dissolved form There are no high-rate reactor devices, in use, for the treatment of complex wastewater, i.e., wastewater containing un-dissolved BOD. A survey of prior art, has revealed no apparatus specifically designed to accomplish the primary object of this invention, i.e., the high-rate anaerobic treatment of wastewater containing suspended solids. Therefore, a survey of related art is given below, wherein, some ideas and concepts related to this invention may be found. This survey is merely in support of the practicality of the concepts used in this invention and does not in any way detract from the absolute novelty of the device.

### Prior art

### Related art in anaerobic treatment of wastewater

High-rate anaerobic reactors enable continuous treatment of industrial effluents at small hydraulic retention times. In other words, reactor sizes are relatively small and the BOD load per •unit reactor volume per day is high. The primary principle that permits high BOD loading is the retention of a large population of viable microorganisms (biomass) within the reactor by decoupling the retention time of microorganism from the hydraulic retention time. In simple language, the microbes stay within reactor longer than the liquid being treated.

A variety of high-rate anaerobic reactor systems are in commercial use. A good description of anaerobic processes and reactors is given by S. Stronach, T. Rudd and J. Lester, "Anaerobic Digestion Processes in Industrial Wastewater Treatment", 1986, Springer Verlag, Berlin. The prominent designs can be classified into three families: 1) fixed-film reactors 2) sludge-bed reactors and 3) fluidized bed reactors. However, none of these prior art high-rate anaerobic reactor systems are suitable for the treatment of wastewaters where a substantial quantity of BOD is present as solid matter. This will be clear from closer examination of the operating principles and constructional features of these reactors.

The fixed-film reactors use a stationary inert packing media within the reactor on which microorganisms are retained as a biofilm. The function of the media is enhanced by the increasing the surface area. But the media should have sufficient open porous channel available for free flow with only minor hydraulic head loss and these channel should remain open even after copious growth of biofilin. Among various media types available, are dumped or random packing comprising rings like units and structured media constructed with corrugated plastic sheets jointed to form blocks with dividing straight channels. Both types of packing media are rapidly choked by the deposition of suspended solids present in wastewater. This is especially true in the case of fully submerged upflow type fixed film reactors. In a downflow configuration, the presence of solids in the wastewater will either lead to choking of media or if media has sufficient porosity and straight channels for free outflow of solids, there will be insufficient removal of BOD.

The sludge-bed reactors enable the retention by using the settling property of sludge which is denser than wastewater, if free of gas bubble inclusions. Specially designed "gas solids separators" are mounted on top of reactor to enable settling of sludge. While these reactors are affected by choking problems as is the case with fixed film reactor, they are still not suitable for the treatment wastewater containing solids. Solids in wastewater will rapidly attach or adsorb to the sludge, decreasing its specific gravity and impairing the settleablity of sludge. This lead to the phenomenon of sludge washout, a common and recurring cause of failure of several installations of such reactor. In general, sludge bed reactors are not recommended for wastewater with more than 30% of COD present as insoluble matter. The originator of UASB (upflow anaerobic sludge bed) technology, Professor Gatze Lettinga, from the Netherlands writes in his comprehensive review: ["UASB process design for various types of waste-water"; Water Science and Technology, 24, 8, 87-107 (1991)] "Regarding the reactor system to be chosen for treating a partially soluble complex wastewater...... it will be clear that process that apply a high superficial velocity, such as fluidized bed and expanded granular sludge bed (BOSS) reactors are unsuitable, unless they are combined with an adequate pre-or post-clarifier.... According to our present expedience, application of granular sludge UASB (or EGSB) reactors becomes doubtful at TSS-concentration in the influent exceeding 6 to 8 g/l because at such high TSS-concentration, the segregation between granular and flocculent sludge does not proceed sufficiently rapidly.... For high strength wastewaters with high insoluble fraction, (i.e., exceeding 15%) generally conventional digesters are in favour over UASB and other high-rate systems."

Fluidized bed reactor using small biofilm carrier particle in fluidized state is free of clogging, choking or sludge washout problems. But fluidized bed reactors are still not suited for treatment of wastewater with insoluble BOD as solids are not retained in the reactor for sufficient time for the solubilization.

The only reactor system which is suitable for the anaerobic treatment of solid containing industrial effluents is the stirred tank digester, also known as sludge digester. This reactor system is a low rate reactor system where no attempt is made to delink liquid residence time from suspended solid residence time nor is there any attempt to retain and increase the microbial biomass in the reactor. The stirred tank digester essentially maintains a homogenous mixture of solids and liquid for sufficient long duration to effect degradation.

There is only limited previous attempt in prior art to develop a high rate reactor specifically for the anaerobic treatment of solids containing effluents. In order to overcome the inadequacies of anaerobic filters and encapsulated bacterial retention systems in treating organic materials with suspended solids content, the prior art has identified the use of the so-called anaerobic activated sludge process, which has also been called the anaerobic contact process [S.Stronach, T. Rudd & J. Lester, "Anaerobic Digestion Processes in Industrial Wastewater Treatment", 1986, Springer, Verlag, pp. 93-120, 136-147]. The anaerobic contact process uses a secondary solids separation stage downstream of the anaerobic reactor and the separated solids are recycled back to the reactor. The secondary separation stages may be gravity settling or mechanically separation such as centrifugation or flotation.

US 5,015,383 describes the difficulties with the anaerobic activated sludge as follows: "The anaerobic activated sludge, or anaerobic contact process, has not been effectively utilised because the bacteria in anaerobic digestion are not easily separated from the mixed liquor effluent. The difficulty his been that actively fermenting organisms do not settle by gravity because of the buoying effects of attached gas bubbles and the fact that the density of the bacteria closely approximate the density of water and do not floc easily. The use of other common liquid / solids separators also have disadvantages. The use of gravity clarification with the addition of high concentrations of flocculating or coagulating chemicals is expensive and harmful to the bacteria. Rapid temperature and pH changes have also been attempted and found to be harmful to the bacteria. Centrifuging has been found to be expensive and detrimental to the bacteria. Conventional dissolved air flotation as well as froth and foam flotation techniques are detrimental to the anaerobic bacteria since even minute amounts of oxygen or air are sufficient to destroy the bacteria. S. Stronach, T. Rudd & J. Lester, Anaerobic Digestion Processes in Industrial Wastewater Treatment, 1986, Springer, Verlag, pp. 35-38". The Burke patent teaches a method of separation using gas flotation, in particular the use of biogas as flotation gas, to overcome separation problems. It would be clear, that this process is hampered by the expense and complexity of the gas flotation process involving mechanical solids removal systems and carried out in closed equipment with a flammable gas. The effectiveness of this process is not known and there is no known installation of the process.

US 4,551,250 teaches a process by which wastewaters containing undissolved solids are treated in a two reactor system in series. A filtering process retains solids in the first reactor of sufficient residence time to be degraded to low molecular weight soluble forms which are passed. While the basic concept of retaining solids for sufficient time by decoupling suspended solids residence time from the hydraulic residence time is the same as hi the present invention, there is no mention in US 4,551,250 pf the certain possibility of clogging of filter media nor about methods by which this prevented. In contrast to my invention, the process disclosed specifically is for a first reactor is operated at a low pH in order to inhibit gas production. In a further point of deviation from my invention, the first reactor in US 4,51,250 is preferably maintained in a quiescent state to avoid turbulence and enhance settling. In a still further deviation, the filtering process is accomplished by biofilm media provided in the first reactor. Now, it would be clear to those in the art, that solids settling and clogging of biofilm media is a major problem in such reactors when treating high strength wastes, an in particular wastes with suspended solids. The declogging of such systems is a an almost impractical task. In any case, US 4,551,250 does not teach any apparatus that would specifically enable the operation of the process while overcoming the obvious problems with respect to filtration of heavily contaminated wastewaters.

A rather crude apparatus and method for the treatment of complex wastewaters is disclosed in GB 2,167,055^{s}. This system comprises an anaerobic followed by a downflow or upflow filter. No method of backwashing or declogging of the filter bed is mentioned. It is obvious that this does not support high-rate operation and may be considered merely a modification of a pond treatment system, and may be applied only where a pond is considered appropriate.

A reactor system which theoretically can function with solids containing effluents are membrane bio-reactor systems wherein membrane modules are used for separation of solids from the liquor. These systems have not been successfully applied for anaerobic processes because of membrane fouling problems, which are more than in aerobic processes. In addition, these reactor systems consume large amounts of energy to drive the membrane systems. It may be noted that membrane systems separate very fine and colloidal matter including individual microorganisms in addition to larger suspended solids present in the effluents of interest. Thus the application of membrane systems for the anaerobic treatment of complex wastewaters is an overkill being inappropriate and uneconomic for the application at hand.

Reference may be made to United States Patent 4,613,434 which teaches a device for treatment of wastewater by means of anaerobic fermentation comprising of a single reactor within which is a lamella and biofilm filter divides the reactor into a mixed lower zone and a an upper zone. Although, the lower zone is claimed for 'acidification' and the upper zone is claimed for methanogenesis and there is no mention anywhere in the patent of solids hydrolysis or the filtering of solids. Let us assume that the apparatus is applied for suspended solids containing wastewater. It will be immediately clear that the apparatus has no mechanism for clearing choking of filter as a result of retention of filtered solids. The lamella filter in lower zone is of no use for buoyant solids which include fats that are usually lighter than water and other-solids with occluded gas bubbles which those in the art will recognise immediately.

Reference may be made to US 5,314,621 where a method for biological purification of wastewater by upflow of wastewater through a buoyant biological filter bed of expanded polystyrene beads with simultaneous injection of air flowing co-currently with through the bed. The filter is backwashed as per the invention by backflushing at a rate of 30 to 80 m/h with treated water stored at an upper part to the reactor. What is non-obvious as per the patent is the provision of brief mini-backflushing operations that expands the filter bed just sufficient to loosen suspended solids within the bed and enable deeper penebration of impurities into the filter bed, thus enabling a longer filter run. It may be noted that the invention is not for anaerobic treatment processes and, further, provides no specific apparatus.

A study undertaken by Nuri Azbar, Pepi Ursillo and Richard E. Speece [Water Research 35, 3, 817-829, 2001] of the effect of reactor configuration and substrate complexity on the performance of anaerobic process is relevant to the present invention. Based on their experiments with various types of well known reactor, they write: "There appears to be something profoundly beneficial to phasing and staging of anaerobic treatment process for the substrates studied" which include simple molecules such as volatile fatty acids and complex mixed substrates such as baby formula.

There is no known teaching in prior of any special apparatus for the anaerobic treatment of solids containing effluentss. Prior art only reveals processes and methods of handling such effluents using known apparatus.

Rrelated art in deep-bed filtration, a common water treatment method for removal of suspended impurities

Buoyant bed filters form a variety of devices in the well known class of granular bed filters prior art. See for example, "Buoyant media filter" [United States Patent 4,446,027 issued May 1, 1984] which uses a 12 inch deep filter bed constructed from commercially available hollow glass beads 0.7 mm in diameter to achieve very good suspended solids removal performance. These devices have so far been intended solely for turbidity removal in water treatment Prior art provides schemes and apparatus is provided for cleaning of the clogged Biter by back washing or back flushing. None of the prior art devices and backwash methods are suited for have the advantage of removal of high concentration of biodegradable suspended solids in heavily polluted industrial waters, which requires the combination of bioreactor and filter.

Another related art is found in "bead filter" devices disclosed for use in nitrification and filtration of aquaculture water. Inventor Robert Malone has shown such devices [US 5,445,740; US 5,126,042; US 5,232,586] wherein a floating filter is used as biofilin carrier device and a filter device for accomplishing nitrification of aquaculture wastewater. In particular the device shown in US 5,232,586 employs a tank having an upper filtration chamber and a lower expansion chamber fluidically connected to each other by a constricted passageway. An inlet line supplies water to the tank through the lower chamber, while a floating media pack forms within the upper chamber during filtration, an outlet toe is connected to the tank above the media pack and delivers filtered water back to the aquatic environment. Back-washing is accomplished by the displacement and expansion of the media pack through the constricted passageway using raw water directed to the upper chamber. The turbulence of this expansion causes the filtered matter and sludge to fall toward a drain line located at the bottom of the tank. Since no aeration provision is provided, the apparatus is suitable only for nitrification using dissolved oxygen already present in the wastewater, i.e., only for low concentration ammonia removal. This apparatus is both unintended and unsuitable for the anaerobic treatment of high suspended solids wastewater, as there is no separate provision for gas collection, and gas bubbles will quickly accumulate in the floating media. It is also clear that the apparatus is intended for filtration of wastewater with suspended solids concentration an order of magnitude lower than that of the present invention. US 5,232,586 invention is merely mentioned as a related art and the simple device therein bears little comparison to our reactor designed to meet the myriad operational requirements that a anaerobic reactor high strength complex wastewater. It is therefore clear that these apparatus do not in any way impinge on the novelty of our invention not only by way of mechanical arrangement of apparatus, but also by way of concept

Some related art in sewage treatment is given herein as our present invention, in addition to its utility in industrial wastewater treatment, also provides a compact and efficient apparatus for treatment of domestic sewage. Sewage is low-strength wastewater and contains BOD in mostly undissolved form. Sewage treatment can take two forms - centralised treatment plants in town served by sewerage systems and decentralised home scale or colony scale units where no full sewerage systems are not available.8

The following quote from'A review: The anaerobic treatment of sewage in UASB and EGSB reactors'; [Lucas Seghezzo et al., Bioresource Technology 65,175-190 (1998)] reveals the importance of a high-rate anaerobic reactor systems for sewage. According to Jewell (1985), there is little doubt that development of cost-effective and efficient anaerobic sewage treatment alternative would be one of the most significant advances in waste treatment history'. Lettinga et al. (1987) fully agreed with this statement by saying that'... a staisfactory application to raw domestic sewage would represent the maximum possible accomplishment for high-rate anaerobic treatment systems'. The term 'high-rate was once used for the later design of sewage sludge digesters, but it now widely used to refer to anaerobic treatment systems meeting at least the following two conditions: (a) high retention of viable sludge under highloading conditions, and (b) proper contact between incoming wastewater and retained sludge (Lettinga et al., 1987)"

Anaerobic treatment has been applied with moderate success for the centralised treatment of sewage in hot climates. UASB type technology is used for primary treatment of sewage. The sewage COD loading rate for UASB type reactors is low (less than 1.5 kg/m³/d) as the primary mechanism of removal of COD and BOD is entrapment of suspended solids in the anaerobic sludge of the UASB reactor, and subsequent degradation. In this manner, suspended solids residence time is decoupled from the hydraulic residence time. But, higher loading rates will lead to sludge washout and failure of the system. Our invention being able to retain solids by active filtration can achieve higher COD and BOD loading without danger of sludge washout. Further it would be clear from the description of the apparatus that floating matter is also effectively retained in our apparatus to complete the degradation process.

In the case of decentralised sewage treatment, septic tanks are effective and commonly used the world over. A septic tank is basically an anaerobic reactor with baffle arrangement to provide sufficient solids detention time to effect degradation. Septic tanks can be used for treatment of composite domestic sewage, or for the treatment of black water from toilets only. The residence time for composite sewage in septic tanks is at least 24 hours, BOD loading rate of the order of 0.3 kg /(m³ d). Septic tanks are designed to provide sufficient sedimentation time for separation of solids from sewage and sufficient volume to provide solids residence time for degradation. Higher loading rates are possible in UASB systems because of better contacting and mixing than in septic tanks, enabling lowering of residence time to 6 hours. At even lower residence time, sludge washout occurs in UASB systems. The effective retention of solids by filtration by our buoyant filter bioreactor, and better contacting and mixing conditions enable the anaerobic treatment of sewage in a compact apparatus. No such filter reactors are available in prior art although several filters for post treatment removal of solids and pretreatment removal of solids from septic tanks are mentioned. The present invention is conceptually different from any of prior art devices septic tank and filter systems, being essentially different in principle, configuration, and method of working, by its use of buoyant filter and gas driven backflush system. Merely for the sake the completeness, a brief review of some septic tank filter devices is given below

Sewage disposal apparatus employing circulating filter media is shown in US 5,308,479. A filter bed using buoyant media is provided for filtration and the media is prevented from clogging by use of a circulating fluid flow generated by either a propeller type agitator or by air sparging. The method in accordance with US 5,308,479 attempts to prevent the clogging of the filter media by moving it continuously in a slow circulation with media particulates being maintained at substantially fixed relative positions during operation. There is no attempt to perform a normal filtration operation - (obviously a more effective filtration operation as compared with a moving bed), and intermittent back flush of media by fiuidization which are essential in our invention. The US 5,308,479 invention is suited for totally unpowered gravity flow operation unlike our invention.

Suspended solids free effluent from septic tanks is desired also to prevent clogging of drain field to which it is discharged. Some invention of septic tank filters have this objective - see for example: simple basket type filters US 5,198,113; US 6,177,004 or simple pipeline filter US 6,136,190, to a complex and rather impractical layered filter as taught in US 6,024,870. These inventions do not seek to enhance the degradation capacity of the septic tank by improving the loading rate.

### Objects of the invention

A primary object of the present invention is to provide a reactor system suitable for anaerobic treatment of complex wastewater containing substantial amount of BOD as insoluble matter.

Another object of the present invention is to provide a device that enables the solubilisation of biodegradable solids and the further conversion of produced soluble compounds into biogas, the two steps being carried out sequentially in separate comportments arranged in a compact unit.10

Another object of the present invention is to provide an apparatus which is capable of effectively removing BOD and suspended matter from the water without requiring a long residence time or increasing the size of the processing vessel.

Still another object of the present invention is to provide an apparatus which enable recovery of biogas.

Yet another object of the present invention is to provide a filter system which is backwashed and de-clogged automatically without the actuation of mechanical or electrical valves or devices with moving parts.

A further object of the present invention is to provide a filter reactor system which is backwashed and declogged whenever the filter pressure drop exceeds a set value.

Yet another object of the present invention is to provide a filter reactor system which is backwashed and declogged at a regular interval.

Still another object of the present invention is to provide a reactor with a filter system that is automatically declogged whenever the filter pressure drop exceeds a predetermined value.

Still another object of the present invention is to provide a reactor that removes biodegradable, settleable and filterable matter from wastewater

Still another object of the present invention is provide an anaerobic reactor, wherein anaerobic bacterial sludge is retained within the reactor even when it has a floating tendency as a result of adsorption of low density material such as fats.

Still another object of the present invention is to provide a high rate anaerobic reactor which does not require external energy input for mixing and agitation.

Still another object of the invention is to provide a automatically declogged floating media filter reactor which has a minimum of moving parts and is easy to operate and maintain.

Still another object ofthe invention is to provide a filter bioreactor that does not require periodic stoppage of flow for backwashing.

Still another object of the invention is to provide a filter reactor with a gas driven back-flushing system, which may, where required, operate only on self produced gas.

Yet another object of the present invention is to provide a multistage anaerobic reactor which can remove successively finer suspended particles and breakdown products.

Yet another object of the present invention is to provide multistage anaerobic reactor which can provide a high efficiency for the removal of both suspended and dissolved organic contaminants in a single and compact reactor.

Yet another object of the present invention is to provide a high rate anaerobic reactor, which can be made tall and slender so as to occupy a small footprint.

Still another object of the present invention is to provide a septic tank and aerobic treatment system that can be used for the treatment of black water sewage from single or cluster of dwellings.

Still another object of the present invention is to provide a treatment device that can carry out anaerobic treatment and aerobic treatment of black water sewage without external power sources and without loss of hydraulic head.

All the above objects are achieved by the invention described herein as the buoyant filter bed reactor with gas-driven backflushing and its various embodiments.

### Summary of the invention

The present invention is the first high-rate reactor, (applying a high superficial velocity), that is capable of treating partially soluble, complex, high-strength wastewaters. Our invention is the first single reactor system in a compact and mechanically simple package that is configured in multiple stages and has the ability to retain complex insoluble substrates in a wide range of particle sizes in spatially separate stages for sufficient residence time to enable complete degradation. Therefore, a highly efficient performance for the removal of both solid and dissolved contaminants may be expected with the present invention The present invention may be seen as a the first ever synthesis of a innovative self-cleaning deep-bed granular filter with staged anaerobic reactor to achieve the object of solids liquefaction by decoupling suspended solids retention time from liquid residence time. The present invention specifically provides a system for periodic declogging of the filter bed and retention of solids in a first stage digester for liquefaction. Our invention can also perform as a self-pumping system, which can discharge sewage at a hydraulic energy grade above that of the inlet sewage. This function is applicable in the case of high-strength blackwater sewage with COD exceeding 3000 mg/l. There is absolutely no mention in prior-art of a self-pumping system for any sewage or any other anaerobic reactor system

Accordingly the present invention provides a device for the biological treatment of wastewater containing biodegradable solids comprising: a vertically oriented elongated vessel portioned by an impermeable wall into an upper chamber and a lower chamber, each chamber being provided with a gas retention space and a liquid retention space; a nozzle establishing fluid communication between the liquid retention space of the upper chamber with the outside of the vessel for discharge of treated wastewater from the vessel; a nozzle for discharge of gas from the gas retention space of the upper chamber; a filter chamber having an inlet communicating fluidly with the liquid retaining part in the lower chamber and an outlet communicating fluidly with the liquid retaining part of the upper chamber; a filter bed placed within the filter chamber, and partly filling its internal volume; a gas conduit establishing fluid communication between the gas retaining space in the lower chamber and the gas retaining space of the upper chamber; and a valve enabling periodic discharge and stoppage of flow of gas through the said gas conduit.

In a preferred embodiment of the invention the reactor is divided by a fluid tight horizontal partition plate into upper and lower chambers. The filter chamber is constructed as modular units, say, using a length of pipe of suitable diameter, vertically penetrating through the partition plate. The module has perforations below a predetermined level in the cylindrical wall opening out into the lower chamber and an impermeable end cap at the bottom. At the top end, a perforated end cap is fitted, opening out into the upper chamber. The module is filled with the buoyant filter media, particle size chosen to effect required degree of filtration of the suspended solids in wastewater. The perforations in the module are chosen to be less than the diameter of the filter particles thus effectively confining the filter bed inside the module. As the bottom end cap is impermeable, it serves to deflect and prevent the escape of rising bubbles into the filter module. The apparatus operates by collection of gas above the liquid surface in the lower chamber below the horizontal partition in the space formed by the inner walls of the vessel, bottom surface of the horizontal partition and outer walls of the filter chamber, above the level of perforation in the filter chamber. The accumulation of gas drives the liquid in the lower chamber through the filter into the upper chamber. Suspended solids are filtered by the granular bed. When sufficient gas has collected in the lower chamber, it is released to the upper chamber.

In yet another preferred embodiment of the apparatus, the gas conduit can be shaped to form simple hydraulic automatic discharge and stop system In this system, the gas conduit forms the shape of a U inside the lower chamber, one arm of the U opening out into the lower chamber and the other arm extending into the gas space of the upper chamber. The diameter of conduit is chosen such that two phase flow of liquid and gas in the operational ranges of gas discharge is the regime of "liquid plug" pushed by gas and not in the bubble flow regime. This may be readily determined by those knowledgeable about two phase pipe flow. Initially, the short arm of the U is totally immersed in liquid in the lower chamber. As gas accumulates in the lower chamber the short arm of U shaped gas conduit is exposed and a plug of liquid in the short arm of the U is pushed by the hydrostatic pressure into the rising longer arm, till it is entirely displaced from the shorter arm. At this stage, the gas pressure in lower chamber gas space just exceeds the maximum hydrostatic pressure of the liquid plug which is then driven upwards and discharges into gas space of the upper chamber. Whence gas flow from lower chamber to upper chamber takes place, simultaneously with back flow of liquid from upper chamber to lower chamber through the filter bed. As the liquid level in the lower chamber rises and reaches above open end of the short arm of the U, the flow of gas is cut off by the formation of a liquid plug inside the gas conduit. The sequence of step is repeated as gas accumulation proceeds once again, thus enabling13 repeated and period backflushing. Further, in order to prevent the entry of suspended solids or floating matter into the U tube, a perforated hood device may be provided at its lower chamber entrance.

In a further preferred embodiment of the invention, gas recirculation to the lower chambers using a pump from a gas reservoir or from an upper chamber gas collection space is provided This can be used to enhance the frequency of backflushing or obtain a longer duration backflush by supplementing gas generation. The gas recirculation also aids in vigorous mixing of the reactor contents to improve mass transfer and enhance the rate of reaction

In yet another embodiment, the apparatus of the invention may be operated as a sequencing batch reactor - "fill, reactor and draw" method - in a most natural and automatic manner. In this embodiment, the wastewater to be treated is charged into the apparatus which already contains a volume of reacted liquor and a large population of anaerobic micro-organisms. The reaction commences producing gas in the lower chamber. The accumulation of gas in the lower chamber displaces the lower chamber liquor through the filter bed into the active sludge in the upper chamber, wherein further reaction and gas production occurs. At the end of the reaction, the reacted liquor may be withdrawn from the upper chamber.

Alternately, an overflow outlet may be provided in the upper chamber, so that treated effluent overflows from the upper chamber when the liquid level rises as a result of accumulation of gas in the lower chamber. Periodically the accumulated gas in the lower chamber is discharged, effecting the backflushing of the filter bed. The gas discharge cycle may be repeated several times if necessary before the reaction is complete. In this mode of operation, the volume of wastewater charged into the reactor during each filling cycle is equal to the volume of gas discharged during one gas discharged cycle and discharged of treated effluent takes place only during the first gas discharged cycle.

A further advantage of the invention is obtained if a non-return valve device is provided at the liquid inlet to the device, which does not permit backflow of liquid from the reactor. Initially the reactor contents are at a hydraulic level which enable the filling of a charge of wastewater by gravity flow. Upon filling, the non-return valve closes preventing reverse flow. As the gas generation proceeds, liquor is displaced to the upper chamber till it reaches an outlet provided at a hydraulic level which may be above the hydraulic level of the inlet stream. The reactor may be so configured so that the upper chamber is tall and narrow with respect to the lower chamber to enable pumping to higher elevation. In addition, the gas discharge volume may be chosen such that there is only one gas discharge operation per sequence. This enables the displacement of a large quantity of liquor from the lower chamber of reactor to the upper chamber. The advantage of this operation is that wastewater is discharged fairly continuously during the gas generation process, at a higher hydraulic level as compared to the source. Hence the reactor, besides providing anaerobic treatment, also provides the function of an equalisation tank and pump system for downstream secondary treatment. It is conceivable that the pumping effect can be beneficially used for downstream treatment, for example, by a exposed aerobic trickling filter or a solar disinfecting basin, while the wastewater drain and suitable collection sump is underground. Therefore a totally unattended operation of the invention is possible with no external power source for anaerobic and aerobic treatment of highly contaminated wastewater.

Another embodiment of the invention is the multistage buoyant filter bed reactor, where there are several intermediate stages between the bottom stage and the top stage. The passage of liquid from bottom to top passes through filter bed at each intermediate stage. This enables very high efficiency of suspended solids and dissolved organic matter removal. The filter beds may be constructed so as to retain coarse suspended matter at the lower stage with each succeeding stage retailing progressively finer solids. This is easily accomplished by choice of the filter media and in particular the particle size of filter media. Gas collected in the bottom stage discharges periodically to the second stage, backflushing the filter bed connecting the two stages. As gas collection at the second stage exceeds the predetermined volume, it is discharges to the third stage backflushing the filter bed at the second stage. This sequence is repeated at each stage to set up a cascade till ultimately the gas is discharged from the system and all filters are flushed. Those in the art will acknowledge the extreme difficulty in filtration separation of wastewater containing large sized to fine sized suspended solids organic matter and will readily appreciate advantages of the multistage buoyant filter bed reactor of this invention which is not only able to separate but also to degrade the separated matter, in a single, compact and energy efficient device.

### Brief description of the accompanying drawings

Figure 1 represents a fully functional laboratory realisation of a two chamber buoyant filter bio-reactor constructed using glass and steel.
Figure 2 represents detail of automatic discharge gas conduit mechanism,
Figure 3 represents detail of filter chamber.
Figure 4 shows detail of a baffle device that permits preferred flow patterns during normal operation and backflushing.
Figure 5 represents an anaerobic reactor provided with a gas release controlled by a electromechanical device.
Figure 6 represents another configuration of an anaerobic reactor provided with a gas release controlled by a electromechanical device.
Figure 7 represents a multistage reactor with three filtration stages.
Figure 8 represent a realisation of the invention, showing a two-stage laboratory scale reactor with a biofilm reactor as a second stage.
Figure 9 represents a realisation of the invention showing a full sized anaerobic reactor with multiple modular filter chambers.
Figure 10 represents a fully functional laboratory sized two-chamber anaerobic reactor, with a biofilm upper stage and an external filter chamber.
Figure 11-a represents schematically (constructional features which those in the art can readily fill in are omitted for sake of brevity) an embodiment of buoyant filter bioreactor which can be used as a septic tank device for the treatment of household sewage.

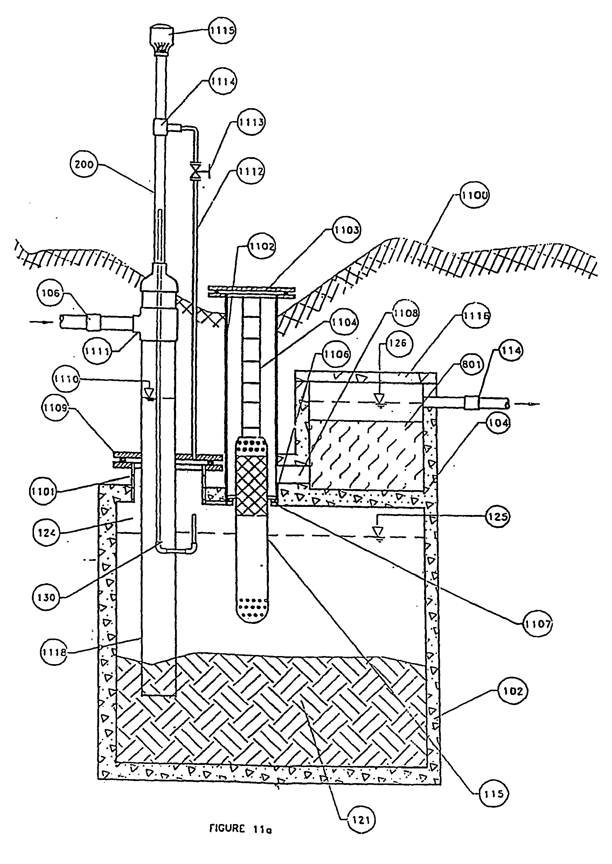

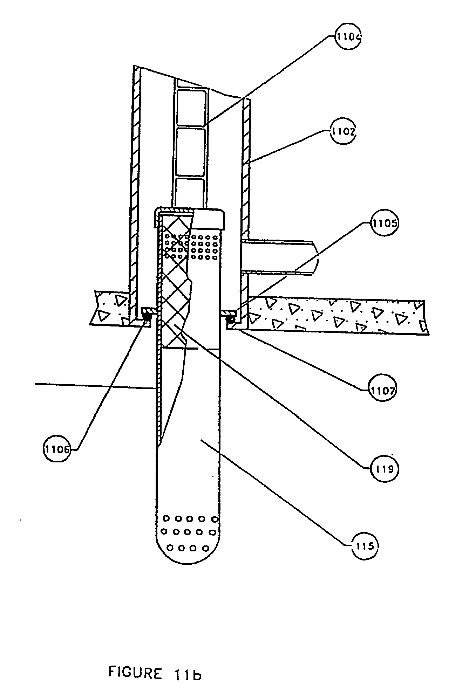

Figure 11-b is an enlarged view of the filter chamber.

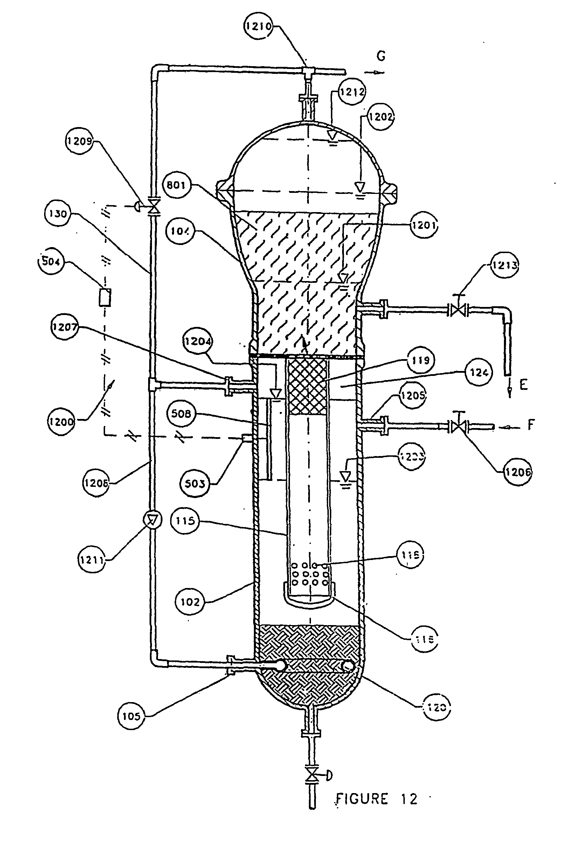

Figure 12 shows an embodiment of the invention suited for sequencing batch i.e., "fill-react draw" mode operation.

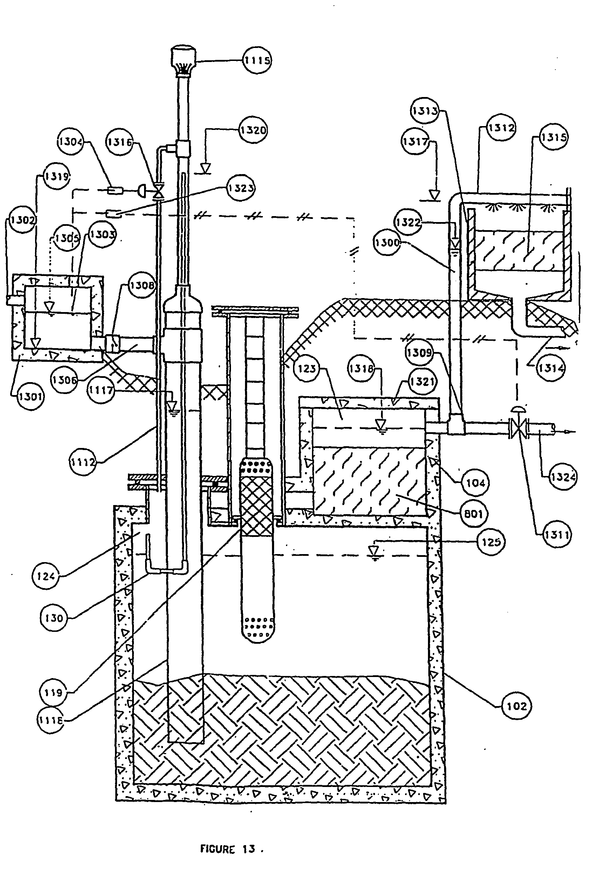

Figure 13 shows a realisation of the invention for unpowered gravity flow operation, suitable for anaerobic-aerobic treatment of black water sewage or high strength wastewater with such components as ground kitchen waste and animal waste.

### Detailed description of the invention

The invention is explained with respect to the drawing accompanying this specification:

In the drawings many details pertaining to fabrication not bearing upon points of novelty are omitted in the interest of descriptive clarity. Functionally equivalent components are given identical reference numbers in the various drawings. These components are explained in detail for the first occurrence only for sake of brevity.

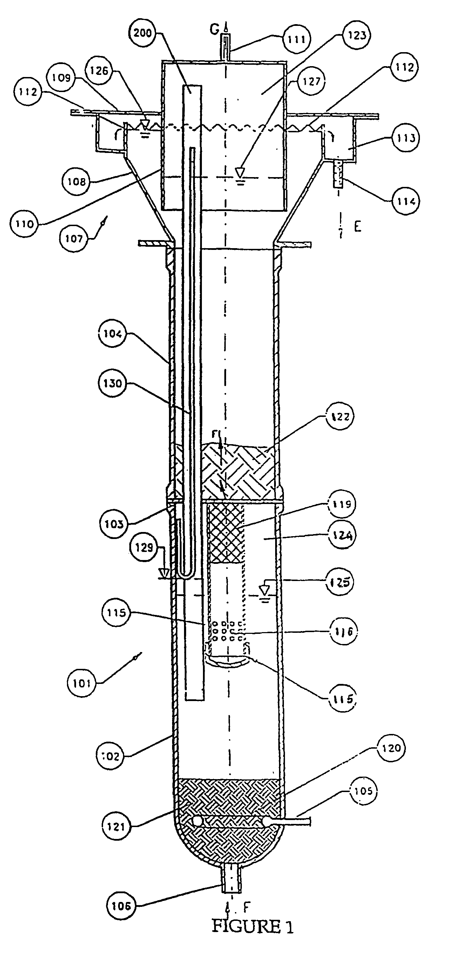

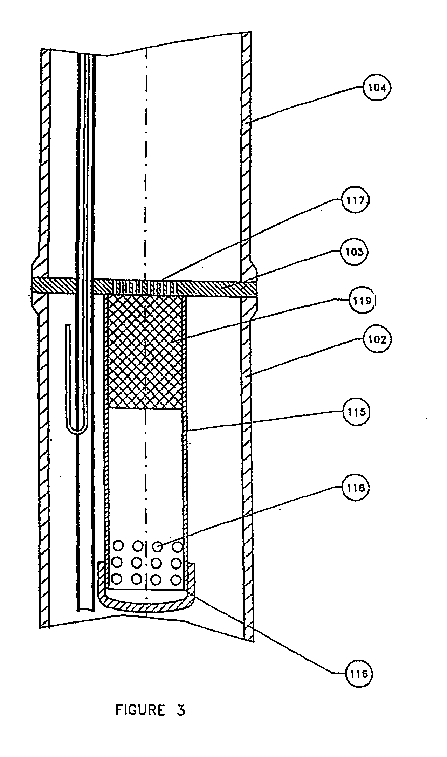

Figure 1 represents a fully functional laboratory realisation of a two chamber buoyant filter bio-reactor constructed using glass and steel. The reactor vessel 101 is partitioned into lower chamber 102, and upper chamber 104, by a plate 103, fixed impermeably between the two chambers. In actual construction of this laboratory realisation of the invention, the plate 103, is clamped together in leak tight manner between two flanged glass columns each of 100 mm internal diameter. The lower chamber 102, is provided with a dished bottom on which is provided15 nozzle 106. for input ofthe feed wastewater by means of a pump (not shown). A gas solids separator 107, made of steel is mounted on top of the upper chamber. The gas solids separator has an outer shell 108, shaped as a inverted frustum of a cone which is jointed in a leak tight manner to the walls of the upper chamber 104, at its top. An overflow weir 112, allows liquid to overflow from the reactor vessel into a circumferential collection launder 113, and thereafter can be taken out of the reactor through an outlet nozzle 114. A cylindrical glass vessel 110, with a open bottom and an impermeable top is mounted on top ofthe gas-solid-separator, by a fixing means 109, such that its cylindrical wall projects inside and off the sloping side walls of the gas-solid-separator. The vessel 110, has a inside diameter larger than the inside diameter ofthe upper chamber 104 and thus forms a liquid sealed gas collection space 123 inside the lid. A gas outlet nozzle 111 connects fluidly the gas collection chamber with a constant pressure gas reservoir (not shown). A filter chamber 115, constructed as cylinder, is mounted inside the lower chamber 102, with its cylindrical walls jointed impermeably to the partition wit! 103. The partition wall 103 is provided with perforations 117 (see figure 3) establishing fluid communication between upper chamber 104 and the filter chamber 115. The filter chamber 115 is also provided with perforations 118 on the cylindrical wall at its lower end and a impermeable end cap 116. A particulate filter bed 119 made of polystyrene beads is confined inside the filter chamber 115. The filter bed 119 occupies only part of the volume of the filter chamber. A glass tube open at both ends, called "return tube 200", is provided penetrating partition wall 103 and sealingly fixed to it. Return Tube 200 is terminated at top in gas space 123 and at bottom well within the lower chamber 102. A gas conduit tube 130, made of flexible tubing, is provided within return tube 200 sealingly penetrates out of the return tube 200 within the lower chamber. The tube 130 is provided with a U bend within the lower chamber 102. An additional nozzle 105 extending inside to form perforated pipe ring 120 is provided in lower chamber for sparging gas recirculated from the gas space 123.

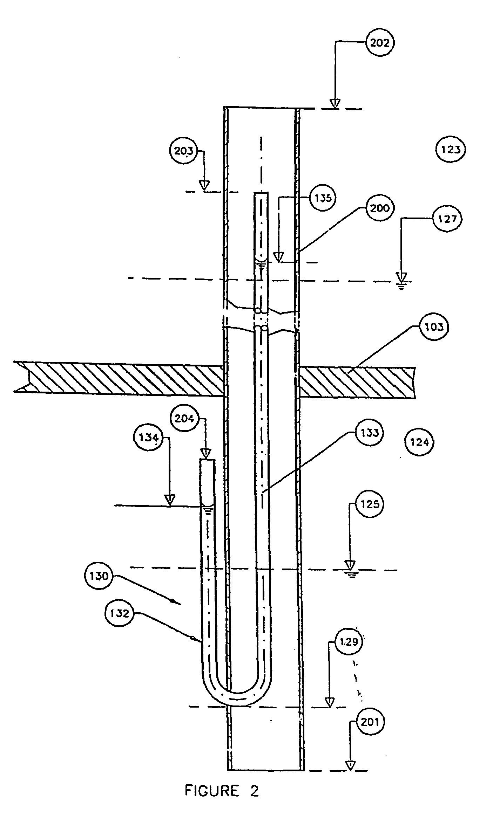

Figure 2 represents detail of automatic discharge gas conduit mechanism, hereinafter called U tube device. The130 tube diameter in case on this vessel was chosen to be 6 mm internal diameter. Larger diameter tubes would be chosen for larger reactors. Any diameter tube may be chosen as long as two phase flow in slug flow regime is obtained during gas discharge operation. The longer limb 133 of the U tube opens inside a larger diameter return tube 200. The return tube 200, open at both ends, is fixed sealingly penetrating the partition wall 103 between the upper chamber 104 and lower chamber 102. Return tube 200 opens at it lower end at level 201 which well below the lower extremity 129 of the U tube. The top level 202 of return tube 200 is above the level 203 of upper extremity of the U tube. Both tubes are terminated in the gas space 12 36 of the upper chamber and above the liquid overflow level 126 in the apparatus. Further, the vertical distance between 203 and 127 is selected to exceed vertical distance between 204 and 129.

Figure 3 represents detail of filter chamber 115. The vertical orientation of the filter chamber ensures that rising gas bubbles are deflected away from the openings 118. The diameter of the openings provided was 1 mm whereas the filter bed particles were 1 to 2 mm size. The filter bed occupies about 50% of the internal volume of the filter chamber.

The operation of the invention is explained below with respect to the laboratory scale model represented in figures 1 to 3. The operation of the subsequent manifestations follows similar principles and has been omitted, except where there are significant differences.

The reactor vessel is filled with deoxygenated water. The particulate bed being of specific ^gravity lower than water, forms a floating bed filter bed 119 against the top perforated cover 103. The reactor is provided with sufficient quantity of acclimatised anaerobic microbial sludge, which may be have granular or flocculant settling characteristics. This forms a sludge bed depicted as 121 in the lower chamber 102 and a sludge bed 122 in upper chamber 104. Inert gas is recirculated through the gas sparging system 120. The continuous pumping of wastewater (arrow F) containing suspended organic matter is commenced through *nozzle* 106. As pumping proceeds an equivalent quantity of liquor in chamber 102 is forced into filter chamber 115 through perforations 118, permeates through the filter bed 119, and exits (arrow Fl) via perforations 117 into the chamber 104. Filtration action at the filter bed 119 retains suspended particles in the wastewater passing through the bed. Some part of soluble matter in the wastewater is immediately converted to methane and carbon dioxide by microbial action in lower chamber 102. The produced gas and the recirculated gases are collected in the space 124 in the lower chamber 102, lowering the liquid surface 125, the displaced liquor again exiting into upper chamber 104 through the filter bed 119. The filtered liquid containing part of the soluble convertible BOD is contacted with the sludge 122 in chamber 104 for further conversion to gas, which is collected in gas space 123 which exits through the nozzle 111 to a constant pressure gas storage tank. Some part of the gas is reciruculated back to nozzle 105 by the gas pump (not shown). A continuous overflow over weir 112 at level 126 is also set up. The level difference between 126 and 127 is maintained at constant level because of the constant pressure gas receiver connected to gas outlet port 111. It may be noted that the gas receiver is usually at slight pressure above atmosphere and therefore, the liquid surface 127 is below the liquid surface 126 at the overflow leveL As the operation proceeds, the liquid surface 125 is pushed below the lower level 129 of the gas conduit tube. Initially liquid fully fills the smaller limb17 132 of the gas conduit tube, 130, and the longer limb 133 contains liquid to a level determined by the pressure difference between the open ends, which is given by the vertical distance between 134 and 135 as in the case of a manometer. As gas pressure in 124 increases the liquid in the shorter limb 132 is pushed into 133, lowering level 134 and raising the level 135. The gas pressure in 124 is given by the vertical distance between 135 and 134 plus the constant gas pressure in 123. Eventually, the liquid level 134 reaches the lowest point of the U, at 129, whereupon no further increase in gas pressure can be balanced by the hydraulic pressure of the liquid column in the gas conduit tube 130 and gas will flow out of 124 through the tube 130, into space 123. The tube diameter is chosen such that gas velocity is the range where slug or plug flow phenomenon is observed. The liquid column *is* therefore pushed out ofthe open end of 133 as a slug and a free flow of gas from 124 is obtained.

It is noted that the gas conduit tube in the shape of a U is difficult to fabricate and assemble inside the return tube as shown in Figure 2, which is merely a working laboratory modeL In actual application, the U will be replaced by a functionally equivalent combination of 90 degree elbows and jointed pipe sections.

The slug of liquid discharged from 135 falls back into the lower chamber 102 via return tube 200. It may also be noted that as return tube 200 extends above the open end 203 of the U tube, and terminates at level 202, which is sufficiently above liquid level 127, to prevent flow of liquid from chamber 102 to 104 via this tube. In fact, it may be noted that the-liquid level inside return tube 200 will be higher than the level 127 by an amount equal to the pressure drop across the filter bed 119. It will be obvious that the tubes 200 and 130 can be so configured as to capture a high velocity slug of liquid ejected from the U tube. Further, obvious variations of this automatic gas discharge system which are functionally equivalent includes 130 arranged substantially outside the tube 200 with only the outlet of 133 configured to discharge inside 200. It may also be understood that multiple gas conduit tubes may discharge their liquid contents into a single return tube 200. Yet another functionally equivalent variation which may be made explicit, is the arrangement of a return chamber integrally constructed in the reactor vessel, instead of a return tube.

The discharge of gas from 124 leads to a liquid backflow from the upper chamber to the lower chamber through the filter chamber 115. The flow enters through perforations 117 and exit through perforations 118. The back flow velocity is much higher than the filtration velocity, and the filter bed 119 expands to a fluidized state as a result, flushing out embedded suspended solid back into the lower chamber. This process is hereinafter termed "backflushing". The bed expansion also breaks bonding of particles because of microbial biofilm growth. As a result of the backflushing flow, the liquid surface 125 in lower chamber 102 rises till it reaches above 204, the open end of limb 132 of the gas conduit 130. The liquid then flows into the tube 130 to once again form a hydraulic column which balances the gas pressure difference between 124 and 123, thus stopping gas flow. This sequence is repeated, the frequency of operation determined by the gas production and recirculation rate. The back flushed solid particles are thus retained in the lower compartment for duration sufficient for solubilization by microbial action.

An advantage of this U tube gas discharge device is that the automatic backflush system requires no electrical power nor does it involve any mechanical moving parts.

A further advantage of this U tube gas discharge device is that in addition to backflushing at a set time interval, the device is also automatically backflushed whenever there is an abnormal increase pressure drop in the filter bed 119 as a result of clogging. An increase in pressure drop across the filter bed will be seen as an increase in gas pressure in gas collection space 124. This increase in pressure pushes down liquid level 134 in U tube limb 132, irrespective of the liquid level 125. If the gas pressure is sufficiently large, the level 134 reaches level 129, and gas is released inducing backflushing of filter.

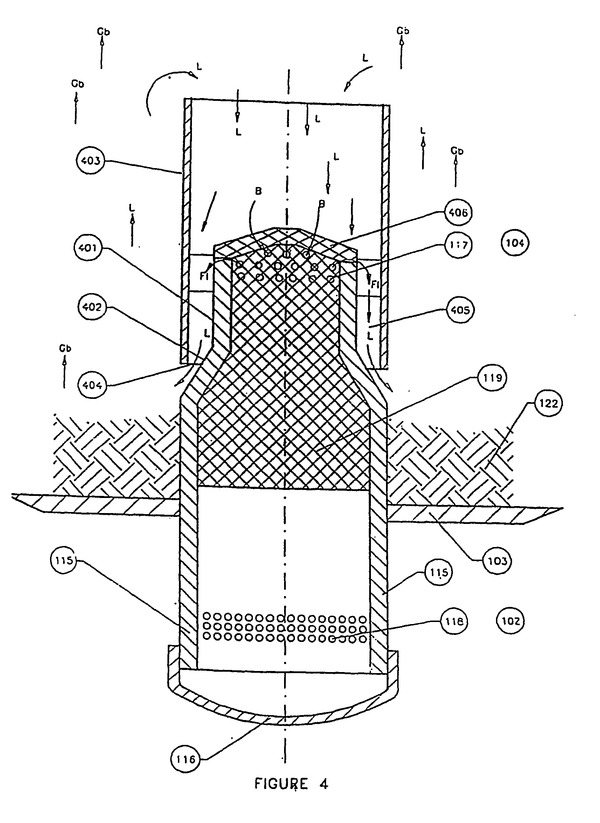

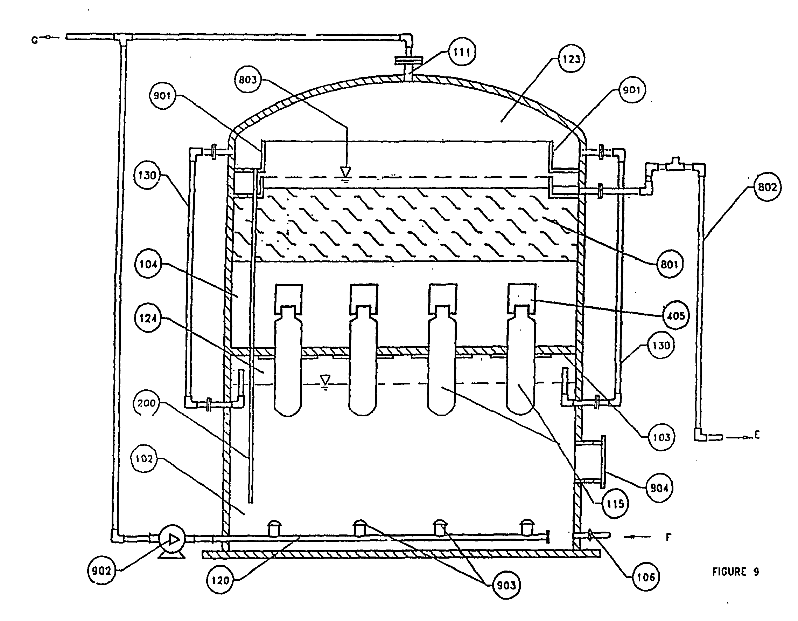

Figure 4 shows detail of a baffle device that permits preferred flow patterns during normal operation and backflushing. The device described in Figures 1 to 3, allows backflow of sludge from the upper chamber 104 to lower chamber 102 during backflushing. This in itself can be used advantageously because it selects the retention of larger sized sludge granules in the upper chamber. The device can also be used without difficulty when the upper chamber is operated as a fixed film reactor as will be described in Figure 9. But in certain situations, it may be advantageous to prevent backflow of sludge during backflushing. An improved design of filter chamber 115 that is able to prevent backflow of sludge 122 from upper chamber 104 into the filter bed 119 during backflushing operation is shown in Figure 4. The backflow of sludge during backflushing can be prevented quite easily by extending filter chamber 115 into the upper chamber so that its upper perforations are at a level above the upper level sludge bed 122. A further improvement in performance can be achieved by enabling contact of filtered outflow liquor (arrow FI) with sludge 122 during normal operation, while only clear fluid above 122 is utilised for backflushing. This objective is realised by the design of a baffle means described herein. A generally cylindrical filter chamber in cross sectional view is represented. Figure 4 is to be read with other figures, with functionally equivalent features having the same reference numbers as in previous figures. The filter chamber 115 at its upper end is shaped as a cylinder 401 of smaller diameter than the lower portion, both parts being jointed by a frustum of a cone 402. It is mounted, sealingly penetrating partition wall 103 separating the upper chamber 10419 from the lower chamber 102. The filter chamber is filled partly with a participate media filter bed 119 and confined by lid 116 at the lower end and 406 at the upper end. A sludge bed 122 is shown at its position in the upper chamber. The filter chamber is provided with a multiplicity of perforations 117 at its upper end which extends above the sludge bed level in the upper chamber. A cylindrical baffle termed "sleeve 403" is provided as circumferential sleeve covering the smaller diameter portion 401 of the filter so a form a annular space 405 between sleeve 403 and 401 and a ring aperture 404 between sleeve 403 and the frustoconical portion 402. The sleeve 403 has an outer diameter not exceeding the outer diameter of 115. During normal operation, rising gas bubbles generated by the action of sludge 122 are confined to the region outside the sleeve 403. The rising gas bubbles (arrows Gb) set in motion a circulating liquid flow (arrows L) which is downward inside the sleeve 403. The circulatory flow is directed toward the sludge through the ring aperture 404. The filter outflow (arrows FI) is carried along with this flow to contact with the sludge bed 122. During backflushing operation, the flow from the upper part of chamber 104 (arrows B), relatively free of sludge, is directed towards the perforations 117 m preference to flow from the sludge region 407 because of the relatively higher resistance to flew through the ring aperture 404. It may be noted that the resistance to flow of the ring aperture is significant only during the high flow condition at backflushing and is insignificant for the gentle circulatory flow condition during normal operation. Thus the device enables contacting of filtered liquor with sludge and avoids sludge entry from the upper chamber 104 into the filter bed during a during backflushing.

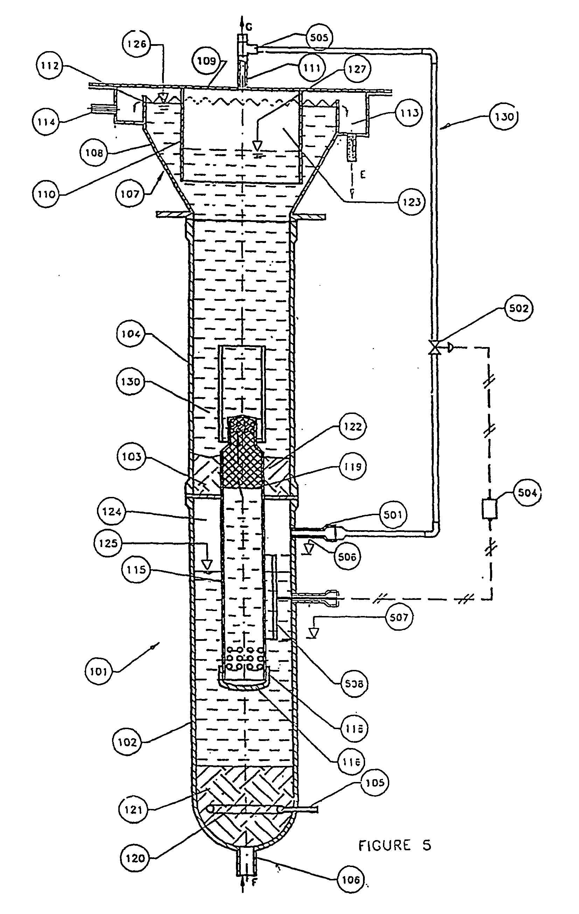

Figure 5 represents an anaerobic reactor provided with a gas release controlled by a electromechanical device, such as a solenoid valve. An external gas conduit 130 is shown, fluidly connecting the gas retaining space 124 of a lower chamber 102 and the gas retaining space 123 of an upper chamber 104. The conduit is connected to the lower chamber at a nozzle 501 and connected to the upper chamber gas outlet 111 by a tee connection 505. An automatic operating valve 502 is provided on the gas conduit 130. A level sensor 508 which can sense liquid surface at levels 507 and 506 is arranged in the lower chamber. The level sensor 508 excites device 504 with appropriate electronic circuitry that signals valve 502 to open at a level 507 and close at level 506. The nozzle 501 is provided at a level above level 506. During operation, the build-up of gas in 124, as in earlier devices, pushes the liquor in 102 through the filter bed, lowering the liquid surface 125. At the level 507 the level sensor activates the opening of valve 502, leading to gas discharge and backflushing of filter bed. The liquid level 125 rises and at level 506, the level sensor activates the closing of valve 502 and the cycle is repeated. An advantage of this arrangement of the invention is that there is no restriction on gas conduit 20 diameter and there is no entry of lower chamber liquor into the gas conduit obviating the need for a return tube. This arrangement is conveniently used in large size industrial anaerobic reactors which are already provided with instrumentation and automation.

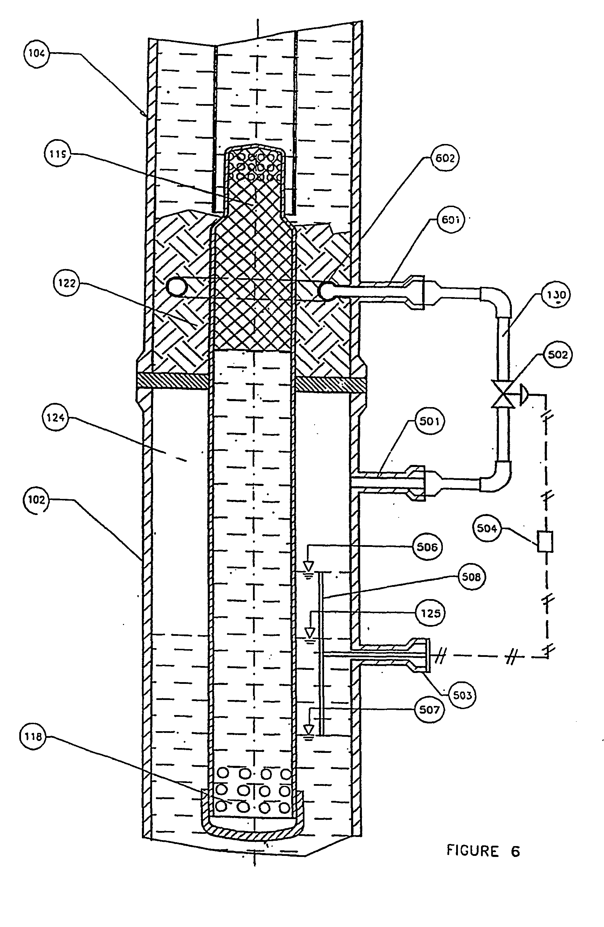

Figure 6 represents another configuration of an anaerobic reactor provided with a gas release controlled by a electromechanical device. The upper chamber 104 is provided with a nozzle 601 and a gas sparging ring 602 for agitating sludge 122 contained in the chamber. Gas conduit 130 connects gas space 124 of lower chamber to the 601 nozzle of the upper chamber 104. Also provided are an automatic valve 502 in conduit 130, level sensor 508 and electronic circuit device 504 for actuating valve 502 as previously described in Figure 5. The gas released through conduit 130 is sparged into the liquid in the upper chamber 104 through a sparging device 602. The sparging device shown is constructed from a perforated pipe in ring configuration but it may be understood that other sparging devices may also be used. The advantage of this system is the mixing of contents of the chamber 104 during the backflushing operation. The mixing of chamber contents will promote the rate for conversion of organic matter. It may also be noted that the entrainment of gas and / or sludge into the filter bed 119 daring can be prevented by the use of a cylindrical baffle device previously described in Figure 4.

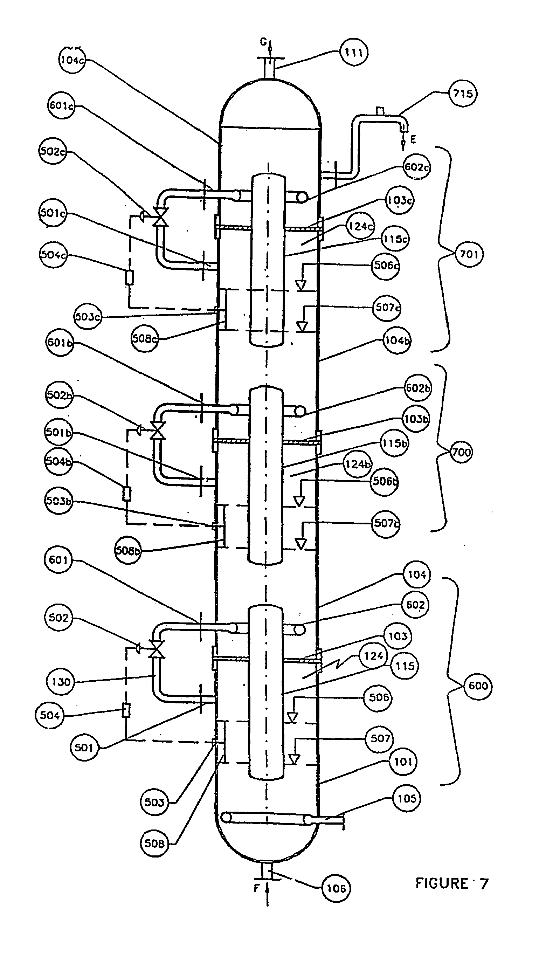

Figure 7 represents a multistage reactor with three filtration stages. Components of identical functionality with previous figures have identical reference number and are not described further. This reactor is a vertical progression of units 600, 700, 701 each functionally identical to assemblage 600 previously desribed When a predetermined quantity of gas has accumulated in space 124, gas release is triggered by level detector 508, switch 504 and control valve 502 as previously explained in the description for figure 5. Gas release backflushes buoyant filter bed in module 115. The gas is released into upper chamber 104 and accumulates in space 124b. When a predetermined quantity of gas has accumulated in space 124b, gas release mechanism is triggered by level detector 508b, switch 504b and control valve 502b as previously explained in the description for figure 5. Gas release backflushes filter in 115b in the second stage marked 700. The gas released from 124b accumulates in space 124c and the process is repeated for in stage 701 as described for stage 700. At each stage, further anaerobic degradation by contained microbial sludge, results in removal of BOD. In this manner, the operation of the apparatus enables filtration and reaction in a staged manner and backflushing of each filter in a staged manner. After 3 stages of filtration and reaction, the final treated effluent is discharged through an outlet 715 fitted with a siphon break means. The gas released from 21 124c finally exits the reactor through outlet 111. A gas-solids-separator is unnecessary after 3 filtration stages, as the effluent will be substantially free of solids.

It would be understood by those in the art that more than three filtration stages can easily be constructed in this manner and each successive filtration stage can be arranged for retention of progressively finer particles by suitable choice of buoyant filter media particulates. In this manner it may be ensured that a very high efficiency of removal of both suspended solids and their soluble degradation products may be obtained In this context, it is worth recalling the "profound" advantages of staging for the degradation efficiency mentioned in the Water Research 2001 reference, and it may noted how this invention is uniquely and excellently suited for such staging for wastewaters with any level of complexity.

Another point of interest for the construction of the reactor, is that at each stage of the reactor, gas production leads to progressively larger quantities of gas to be released and therefore, higher frequency backflushing may be achieved for progressively finer filter media.

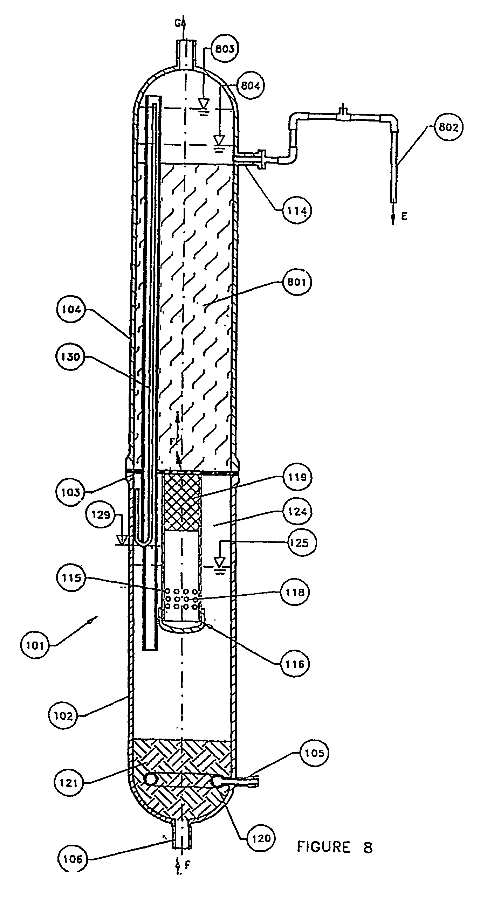

Figure 8 represents a realisation of the invention, showing a two-stage laboratory scale reactor with a biofilm reactor as a second stage. Once again, components, functionally identical to those of earlier figures are identified by same reference numbers as in previous figures and are not explained further. The upper chamber 104 is filled with a biofilm support packing material, 801, several of which is commonly known in prior art The upper chamber 104 is also provided with a effluent discharge nozzle above the packing level and fitted with a common siphon break overflow assembly 802 to maintain a maximum level of liquid 803 in the reactor. Suspended solids are retained substantially in the lower chamber and dissolved contaminants are passed on to the upper chamber wherein reactions catalysed by an attached biofilm on the packing material result in further conversion of BOD to gaseous products. This reactor is also backflushed by the mechanism previously described in figure 2. The level of liquid in the reactor upper chamber fluctuates between 804 at end of backflush and 803 at discharge level. Large back-flow velocities obtained during the backflushing operation also help in removing biofilm debris from the packing material. It may clearly be understood that biofilm stages may used as final stage of multiple fiber stage reactors very profitably to obtain extremely high BOD and COD removal efficiency for complex wastewaters.

Figure 9 represents a realisation of the invention showing a full sized anaerobic reactor with multiple modular filter chambers. Again, all parts which are functionally equivalent to parts in 22 previous figures are identified by same references numbers as in previous figures, and are not explained further. This reactor is a large sized anaerobic reactor with two chambers. The upper chamber 104 is partly filled with biofilm carrier media 801 explained earlier. The upper chamber 104 and lower chamber 102 are separated by an impermeable partition wall 103. Fitted on the partition wall are multiple filter chambers 115, each of which has form identical to that explained in Figure 4. Automatic gas discharge from gas space 124 of lower chamber is accomplished by multiple U tube type gas conduits 130. The gas conduit tubes are provided external to the reactor, but it may be understood that these tubes can equally well be provided internally within the reactor vessel. The number of gas conduits 130 provided depends on the gas production and circulation rate, keeping in view the necessity of flow in each of the conduits being in the slug flow regime. Each of the gas conduit tubes 130, discharge into a liquid collection launder 901, provided at a sufficient height above the overflow discharge level 804 of liquid in the reactor vessel. A single return tube 200 is connected to collection launder 901. A gas recirculation pump 902 is provided for recirculation of gas from 123 to the lower chamber. The gas sparging system 120 has multiple gas diffusion devices 903 connected to a common gas pressure header pipeline. A large manhole 904, in the lower chamber 102, is provided for maintenance access to the filter chambers. The operation ofthe reactor follows *the* description given for device shown in Figure 8.

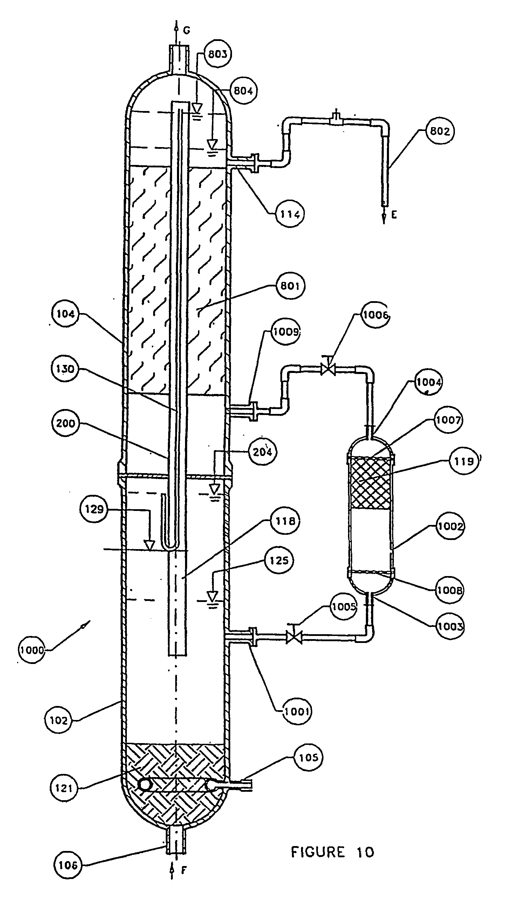

Figure 10 represents a fully functional laboratory sized two-chamber anaerobic reactor 1000, with a biofilm upper stage and an external filter chamber. The upper chamber 104 is constructed as a packed bed reactor as described in Figure 8, and is provided with an additional nozzle 1009. The lower chamber 102 is provided with additional nozzle 1001, at a level below the lowest liquid level 125, in chamber 102. Also provided is an external filter vessel 1002, which is partly filled with a buoyant particulate media 119. Filter vessel 1002 is provided with a bottom nozzle 1003 and fluidly connected to the lower chamber at nozzle 1001 and a top nozzle 1004 fluidly connected with to the upper chamber through nozzle 1009. The filter vessel 1002 is provided with perforated plates 1007 and 1008 at the top and bottom respectively, confining the buoyant particulate bed 119 within the filter vessel 1002. During normal operation, the filter bed 119 is retained against the top perforated plate 1007. During backflush operation, the filter bed is fluidised but retained by the lower perforated plate 1008. Manual shut-off valves 1005 and 1006 are provided on the conduits connecting the external filter vessel with the reactor vessel. Valves 1005 and 1006 may be closed for isolating the external filter vessel 1002 for maintenance of filter. The reactor 1000 is provided with a U tube type gas discharge conduit system as previously described in Figure 2, which operates between liquid levels 204 (upper) 23 and 125(lower). The method of functioning is similar to the apparatus described in Figure 8 and shall not be described further for sake of brevity. The advantage of this configuration is the greater access to the filter chamber for removal, replacement or maintenance of the filter media.

Figure 11-a represents schematically (constructional features which those in the art can readily fill in are omitted for sake of brevity) a preferred embodiment of the buoyant filter bioreactor invention which can be used as a septic tank device for the treatment of household sewage. The device is shown under ground level marked as 1100. House sewage connection is provided to port 106 and via tee joint 1111 to the lower chamber 102. A filter access port 1102 from ground level opens into the lower chamber 102. 1102 is provided with gas tight lid 1103. The lid opening is at an elevation above the gravity overflow nozzle 114 of the device so that accessing the filter by opening lid 1103 does not result in overflow of liquid contents. The filter chamber 115 is provided with a long handle 1104 to enable removal of the filter chamber as module for maintenance. The filter chamber isprovided with a welded or unitary moulded flange 1105 (refer figure 11-b for enlarged view of the filter chamber) and o-ring 1106 to enable leak-tight seating of 115 at the base 1107 of the filter access port 1102, preventing liquid communication between 102 and 1102 except through the filter chamber 115. Also provided for gas discharge from gas space 124 of the lower chamber 102 is a U tube type gas conduit mechanism, 130, with return tube 200, functioning of these having been described previously in figure 2. The return tube is extended upwards to a suitable height for exhaust of the gas without odour nuisance. A hood 1115 is provided for the gas exhaust to prevent entry debris or rainwater. Alternately, the gas exhaust can be provided with a gas biofilter (not shown) for odour control. Additionally, a gas release tube 1112 with a manually controlled shutoff valve 1113 is provided from the top ofthe gas space 124. 1112 opens out into the return tube 200 via tee joint 1114 at a height above the gravity overflow 114 from the system, and valve 1112 is accessible from ground level. The inlet port 106 is shown attached to the return tube 200 which is expanded to sufficiently large diameter tube, called downcomer tube 1118, in the embodiment shown. This arrangement reduces the number of nozzles that require to be cast into the septic tank chamber. It works just as well to provide a separate nozzle directly into 102 for input of sewage. The upper chamber, 104, is provided with a biofilm carrier packing, 801. Chamber 104 is connected to the filter chamber via conduit 1108. Chamber 104 is provided with a simple non-gas tight lid, 1116 that may be removed for maintenance ofthe packing.

In operation, sewage flows into lower chamber 102, via the downcomer tube, 1110, by gravity. The inlet downcomer tube 1118 contains sewage up to level 1110, which is slightly above the outlet level 126, the difference being the pressure drop across the filter bed. The input sewage contacts preferably with the settled sludge 121 in 102. An equivalent quantity of substantially reacted liquor from 102 is displaced to 104 through the filter 119, as a result of difference in level between 1117 and 126. Settle-able solids are retained in the 102 chamber along with active sludge, 121, where anaerobic reactions result in gas formation. Further degradation of filtered BOD takes place in 104 which is provided with a biofilm retaining packing material 801. The gas produced in 102 accumulates in space 124 and is released through the 130 conduit into the atmosphere periodically when a predetermined level is reached. The gas release process also achieves backflushing of the filter and solids entrapped in the filter fall back into 102 to undergo degradation. The gas produced during sewage anaerobic degradation is low because of the low BOD and COD strength of sewage. It is known that gas production of the order of 0.19 m³/kg-COD-removed, which amounts to a range of 35 to 40 litres of gas per cubic meter of average strength sewage (COD 300 mg/l). The filter backflush volume, being equal to gas production, is about 1 cubic meter per 25 to 28 cubic meters of sewage treated. Gas release tube 1112 is provided for manual release of gas by opening valve 1113 to trigger additional backflushing or for draining of the 104 chamber for maintenance. The filter can also be removed through by opening lid 1102 for maintenance or replacement of filter module if required.

An advantage of this invention is that the effluent is efficiently filtered and free of solids, it prevents the final disposal absorption field from clogging.

The major advantage of this invention is that the size of the plant can be made smaller than conventional septic tanks. As sewage BOD is mostly in undissolved form, an efficient filtration system, made of small particle size media, enables the device to be reduced in size, permitting construction as prefabricated units made by plastic moulding. Mass production of the device can lower cost and promote sanitation in developing countries. It is also possible to install this device within the building because of its small size. The device is also suitable for mobile applications.

In community scale operation, the gas produced in the device, can be used as fuel source for such applications water heating boilers.

Figure 12 shows a realisation of the invention which is particularly well suited for sequencing batch i.e., "fill-react-draw" mode operation. Components of same functionality with previous figures have same reference numbers and are not further described for brevity. A two chamber anaerobic reactor with a buoyant filter bed is shown as 1200. It comprises a lower chamber 25 102 and an upper chamber 104. The upper chamber is constructed as a packed bed with attached biofilm as previously described in figure 8. A long filter chamber 115 extending well into the lower half of 102 is provided. A nozzle 1205 and valve 1206 are provided for filling of liquid into the lower chamber and another nozzle 1207 is provided connecting to gas conduit 130 communicating with the upper chamber. A valve 1209 is provided in the gas conduit for closure of gas conduit during react operation. A branch 1208 is provided in the gas conduit 130, before valve 1209 for pumping of gas using a pump, 1211, into the liquor in lower chamber through a sparging device 120. This enables gas mixing of the contents of the reactor. The apparatus is operated as follows:- Initially the reactor is filled with reacted liquor till level 1201 in chamber 104 and level 1204 in chamber 102. The liquor contains active and preacclimatised microbial cultures capable of degrading the contaminants in the wastewater to be treated. The level 1204 or indeed any other level in lower chamber 102, can be maintained constant during the liquid charging operation by closing of valve 1209 and valve 1213. The wastewater to be treated is charged (arrow F) into the vessel through nozzle 1205, keeping gas conduit valve 1209 closed and pump 1211 off. Some part of the reacted liquor in the chamber 102 is displaced by fresh effluent through the filter 119 into chamber 104. The liquid level in chamber 104 rises to level 1202 at the end of the fill operation. At the end of the fill operation, valve 1206 is closed, valve 1209 is maintained in closed position, and pump 1211 is started beginning the react operation, wherein mixing is enabled by the gas sparging operation of the pump 1211. The reaction proceeds with gas produced accumulating in space 124, lowering level 1204. An equivalent volume of liquor is displaced through filter 119 into chamber 102 wherein the liquid level rises to level 1212. As the liquid level in 102 is lowered to level 1203, the gas valve 1209 is opened and gas is released (arrow G) to a constant pressure gas reservoir (not shown). This initiates a backflushing of the filter bed 119. The gas release is stopped by shutting-valve 1209 when the liquor level in 102 reaches 1204. This process may be automated by using any of the devices previously described and in the figure a level sensing and valve control devices 508, 504 previously described is shown. The react process is continued, if necessary, with several gas release and backflushing operations, until gas production rate is substantially reduced, indicating the end of the reaction. At the end of the reaction, the treated liquor is drawn, (arrow E), from chamber 104 by opening valve 1213. The process of filling, reacting and drawing may be repeated with a fresh batch of wastewater. It may be understood that this method of operation can equally be applied to apparatus with multiple filtration stages.

It may also be noted that short circuiting of feed through the filter bed is avoided by the positioning of nozzle 1205 at an elevation well above the level of the inlet perforations 118 of filter chamber 119. In any case, even if part of the feed circuits through the filter bed into 104 during the feed operation, this does not affect the efficiency of the process materially, as reactions can proceed in the 104 chamber also. Further, during backflushing operations which may take place several times during the react phase depending on the strength of the wastewater, liquid in chamber 104 gets returned to chamber 102.

Figure 13 shows a realisation ofthe invention for unpowered gravity flow operation, suitable for anaerobio-aerobic treatment of black water sewage or high strength wastewater with such components as ground kitchen waste and animal waste. The system is designed to provide both anaerobic and aerobic treatment by self-pumping of anaerobic treated effluent to an aboveground-air contact aerobic treatment stage. It works with complex wastewater whose gas production potential is larger than its liquid volume. Such a situation is possible whet the waste contains degradable COD in excess of 2500 mg/l. In the figure, 1301 is a collection tank provided with a nozzle 1302 connected to sewage line from toilets. 1301 is provided with a outlet conduit 1306 connecting to the treatment unit. A one-way valve 1308 is provided on the line 1307 connecting 1301 with the lower chamber of the treatment unit 102. The basic treatment unit is a two chamber buoyant filter bed reactor as described previously in Figure 11. A removable filter and filter chamber as previously described is provided for ease of maintenance. At least part of upper chamber 104 is below the lowest level 1319 of the collection tank. The upper chamber 104, unlike in the apparatus of Figure 11, is provided with a gas tight lid, 1321. The apparatus shown is not provided with a gas storage and utilisation system Needless to add, gas collection system may be installed, where required, without difficulty. Liquid knockout and return tube 200 is continued vertically to terminate in a gas exhaust hood 1115 at a suitable elevation to eliminate odour nuisance as previously described. An additional gas release tube 1112 with an automatic shut off valve 1316 for release of gas from gas space 124 is provided. The tube 1112 opens out into the liquid knockout and return tube 200 at a suitable elevation, 1320, above the highest liquid level in the system, i.e., 1317. The upper chamber 104 is provided with liquid outlet 1309 at its top. The liquid outlet rises vertically and discharges through a perforated distributor 1312 into a air contact tank 1313 filled with packing media 1315 for the growth of aerobic micro-organisms. The tank 1313 is provided with a outlet 1314 at its bottom for discharge of aerobic treated water safely.

In operation, wastes such as black water sewage from toilets is discharged into the collection tank 1301. The level of liquid in 104 is kept sufficiently lower than the bottom level, 1319, of tank 13 01. At 27 this condition, one-way-valve 1308 opens and permits the flow of waste into 102, by gravity. Tank 1302 is constructed with its floor being above the full or overflow level of chamber 104 (shown as 1318), so that it can be entirely emptied by gravity. When 1301 empties, and the conduit 1307 is empty, one-way valve 1308 is arranged to close. A swing type valve is appropriate as one-way valve 1308, as it is in normally closed condition when the conduit is empty. In tank 102, an active population of anaerobic bacteria, start the degradation reactions leading to gas production. Gas is collected in space 124 of chamber 102 and liquor is displaced into 104 through filter 119. The gas discharge mechanism is positioned so that before each gas discharge takes place, sufficient liquid, at least equal to the capacity of the collection tank, 1301, is displaced into upper chamber 104, and liquid is forced out into the rising outflow conduit 1300, where level 1322 rises above bottom level, 1319, of tank 1301, ultimately flowing out through 1312 into the packed bed 1312. Here aerobic microorganisms continue the process of degradation through secondary treatment, leading to a high degree of removal of BOD. Liquid back flow from lower chamber 102 into the collection tank 1301 is prevented by the one way valve 1308. When sufficient quantity of gas has accumulated, it is discharge through the operation of the U tube mechanism previously described. At this stage, filter 119 is backflushed and the liquid level 1322 is lowered and gravity flow of liquid through one way valve 1308 is possible if liquid is present in 1302. If there is no liquid in 1302, and the gas production rate in 102 is still continuing at an effective rate, a secondary cycle is repeated with gas accumulation in 124, liquid displacement through filter into 104, till final gas discharge and back wash of filter. But during this secondary cycle, there will not be any overflow of liquid through 1312. Now, it is possible that gas accumulation has ceased with a certain amount of gas accumulated in space 124 and level 1322 is above the level 1319, while influent sewage has accumulated in 1302, to a predetermined level 1305. At this stage valve, level operated mechanism 1303, 1304, is activated and valve, 1316, in additional gas discharged tube 1112, is opened automatically, and gas is released from the system The liquid level 1318, is thus brought to its initial state below 1319, immediately allowing input of sewage from 1302, and emptying tank 1301.

It is required to have a COD in excess of 2500 mg/l if sufficient gas production volume is to be generated to enable displacement pumping against gravity. This mode of operation is therefore suitable for strong wastes such as blackwater and ground food waste discharges. However, it is possible that there are occasional unavoidable discharges of lower strength wastes into the system, and sufficient gas production is, therefore, not available to enable displacement pumping of liquid through 1312. In this case, hydraulic levels 1322 will equal level of liquid, 1305, inside the collection tank 1301. There will be no emptying of tank 1301, even when the valve 1316 is opened. In such instances, a gravity flow option, through a conduit 1324 connected to the conduit 1300 via a tee joint 1309 is provided to enable the operation of this device in a manner similar to device described in Figure 11. An outflow valve 1311 is 28 provided in this conduit, which when open, enables the discharge of the upper chamber liquor by gravity. Outflow valve 1311 is activated by a timer mechanism 1323, connected to the level sensing device 1303. The timer activates the opening of valve 1311 if tank 1301 is not emptied within a predetermined short time interval after opening of valve 1316, i.e., if the level sensor 1303 continues to detect the presence of liquid level 1305, even after a set time interval after opening of valve 1316. When valve 1311 is open, for low strength wastes, the device does not provide pumping into for above-ground-air-contact treatment, but merely discharges anaerobic treated effluent from the upper chamber, 104. Once valve 1311 is open, collection chamber 1301 is emptied, and the one-way valve 1308 as well as valve 1311 closes. In case, sufficient gas production takes places with the fresh input of waste, the cycle of operation with liquid discharge through outlet 1312 as previously described takes place. Otherwise, wastewater flowing into collection chamber, 1301, simply flows by gravity into the lower chamber, 102, displacing an equal quantity through the filter 119 into the upper chamber 104. As valve 1311 is in closed position, liquid accumulates in 104 and level 1322 rises in the conduit 1300 along with corresponding level, 1117, in the downcomer tube 1118. When 1117 rises above at the level of conduit 1306, no further flow of wastewater from the collection tank 1301 is possible, and an accumulation of wastes takes place in 1301 until it reaches the trigger level of sensor 1303. At all times during this process, a slow gas accumulation takes place in 124, as a result of anaerobic degradation. The quantity of gas may not be sufficient to trigger self-release through the 130 U tube mechanism. However, whatever gas accumulated in 124, is released by the operation of automatic valve 1316. During each such gas release, backflushing of the filter takes place and simultaneously further wastes flow into the down-comer 1118, till level 1117 rises to equal level of liquid in 1301. As there is no outflow from the system, wastes will accumulate in 1301. The triggering of valve 1316 initiates gas release and backflushing of filter, but liquid flow into the reactor is no longer possible. Under this condition, the timer device activates opening of valve 1311 for a predetermined duration and outflow by gravity takes place from 104 emptying collection tank 1301. The valve 1311 closes after tank 1301 is emptied. This cycle is repeated as long as gas production is insufficient to create outflow through the 1312 outlet. As soon as gas production at sufficient rate commences, pumped discharge of liquid through the 1312 outlet takes place and no outflow through the 1324 outlet takes place. Depending on gas production potential of the wastes, the system may also operate with discharge through the 1312 outlet and discharge through the 1324 outlet alternately.

It may also be noted that any gas accumulation in space 123 of upper chamber 104 is discharged through either liquid outlet 1312 or 1324, whichever is open.

## Claims

1. A device for the biological treatment of wastewater containing biodegradable solids comprising: a vertically oriented vessel (101) partitioned by an impermeable wall (103) into an upper chamber (104) and a lower chamber (102), each chamber being provided with a gas retention space (123, 124) and a liquid retention space; a nozzle (106) establishing fluid communication between the lower chamber and the outside of the vessel for input of wastewater into the vessel; a nozzle (114) establishing fluid communication between the liquid retention space of the upper chamber with the outside of the vessel for discharge of treated wastewater from the vessel; a nozzle (111) for discharge of gas from the gas retention space of the upper chamber; a filter chamber (115) having an inlet (118) communicating fluidly with the liquid retaining part in the lower chamber and an outlet (117) communicating fluidly with the liquid retaining part of the upper chamber; a filter bed (119) placed within the filter chamber, and partly filling its internal volume; a gas conduit (130) establishing fluid communication between the gas retaining space in the lower chamber and the gas retaining space of the upper chamber; and a valve (502) enabling periodic discharge and stoppage of flow of gas through the said gas conduit.

2. A device as claimed in claim 1, wherein the filter chamber (115) is oriented with its axis vertical and is contained within the said vessel.

3. A device as claimed in claim 1, wherein one or more intermediate chambers are provided between the top chamber and bottom chamber, the chambers being arranged one below the other and each pair of adjacent chambers constituting and upper chamber and a lower chamber as claimed in claim 1.

4. A device as claimed in claim 3, further comprising a vertically oriented filter chamber (115, 115b, 115c) penetrating the partition wall between each said pair of upper and lower chambers, to establish fluid communication between such chambers.

5. A device as claimed in any preceding claim, wherein the said filter chamber(s) (115) are provided with porous plugs at both ends, to retain the said filter bed within the filter chamber while permitting free flow of fluid.

6. A device as claimed in any of claims 3 to 5, wherein, for each neighbouring pair of chambers, the said gas conduit (130) communicates fluidly between the gas retaining space of the lower chamber and the gas retaining space of the upper chamber.

7. A device as claimed in any preceding claim, further comprising a valve (502) device the or each said gas conduit (130) between the lower chamber and upper chamber, a means (508) for sensing the liquid level in the or each lower chamber and activating the valve device for starting, stopping and controlling the gas flow through the gas conduit.

8. A device as claimed in any preceding claim, wherein the or each gas conduit further comprises a descending leg in the lower chamber through which gas flow is downward in operation of the device, and an ascending leg through which gas flow is upward in operation of the device, the gas conduit inlet (601) in the lower chamber being located above the level of the fluid inlet (118) to the said filter chamber between that chamber and the chamber immediately above, the gas conduit outlet (111) in upper chamber being located above the operative liquid surface level (127) in the upper chamber.

9. A device as claimed in any preceding claim, wherein the upper and lower chambers, or each pair of neighboring chambers, is further provided with a liquid return conduit (200) connecting the liquid retaining space of the lower chamber with the gas retaining space of the upper chamber and a gas conduit (130) between the lower and upper chamber, wherein the outlet of the gas conduit in the upper chamber opens into the liquid return conduit.

10. A device as claimed in any preceding claim, further comprising at least one nozzle (105) for gas injection into at least one lower chamber, a conduit (1208) for circulation of gas, optionally with a pump (1211), from the gas retention space of any of the chambers to the said nozzle for gas injection.

11. A device as claimed in any preceding claim, further comprising a cover or a baffle means (403) for deflecting rising bubbles away from the inlet to said filter chamber.

12. A device as claimed in any preceding claim, further comprising a means (401-404) for directing the flow of fluid emanating from the filter chamber toward the lower part of the upper chamber.

13. A device as claimed in any preceding claim, further comprising an inverted generally frustoconical baffle means for directing the flow of fluid emanating from the filter chamber toward the lower part of the upper chamber.

14. A device as claimed in any preceding claim, wherein the or each said filter chamber is provided with an extension (401) in the upper chamber well above the region occupied by sludge in the upper chamber during operation of the device, outlet perforations (117) being provided on the said extension of the filter chamber, said extension of said filter chamber being of smaller diameter than the main body of the filter chamber, the device further comprising a cylindrical tube baffle means (403) to deflect rising bubbles away from the outlet of the filter chamber and to induce a circulatory flow in the liquid contents of the upper chamber which is downward directed in the vicinity of the outlet perforations of the filter chamber, during operation of the device.

15. A device as claimed in any preceding claim, wherein the said the or each conduit (130) establishing fluid communication between the gas retaining spaces in the lower and upper chambers is of internal diameter between 5 mm and 25 mm for at least part of its length.

16. A device as claimed in any preceding claim, wherein the said gas retention space (124) in said lower chamber is a substantial part of the volume of the lower chamber.

17. A device as claimed in any preceding claim, wherein the at least one of the said chambers contains a packing media (801) adapted for biofilm formation.

18. A device as claimed in claim 17, wherein the upper chamber contains a packing media (801) adapted for biofilm formation.

19. A device as claimed in any preceding claim, further comprising a gas-solid-separator means (107) fixed to the top chamber to provide disengagement of gas, settling of sludge and overflow of clarified liquor from the vessel.

20. A device as claimed in any preceding claim, wherein the gas retention space in the said top chamber comprises a floating gas holder.

21. A device as claimed in any preceding claim, further comprising a means (105,1208,1211) for mixing the contents of the chambers.

22. A device according to any preceding claim, for the treatment of high-strength sewage, comprising a collection tank (1301) for collecting by gravity flow high-strength sewage and wastes, a nozzle in the collection tank for discharge of wastes, a level sensing device in the collection tank, a conduit (1306) connecting the collection tank to the lower chamber (102), at an elevation below the floor of the collection tank, to permit flow of high-strength sewage into the said lower chamber by gravity, a one-way valve (1308) in the feed conduit to prevent the back flow of liquid from the lower chamber to the collection tank, at least part of the liquid retaining space of the upper chamber being at an elevation above the said lower chamber, at least one filter installation chamber (115) extending vertically from the lower chamber to the outside at an elevation above the highest operative liquid level in the device, a gas tight lid (1103) for the filter installation chamber, a conduit (1108) establishing fluid communication between the said filter installation chamber (115) and the upper chamber (104), at least one filter module (115) having a elongated housing partly filled with a buoyant particulate media (119), the housing having perforations at both its ends to allow the flow of fluid through the module but to retain the buoyant particulale media, at least one filter module installed vertically in the filter installation chamber with a fluid impermeable seal (1104) to prevent fluid communication between the filter installation chamber and the lower chamber except through the filter module, the filter module being of a length such that the perforations at its lower end are at all times during operation of the device immersed in liquid retained in the liquid retaining part of lower chamber (102), forming a liquid seal to prevent entry of gas from the gas retaining space while liquid communication is established from the lower chamber to the upper chamber through the filter module, a return conduit (201,118) extending vertically from the lower chamber to the outside, terminating at a elevation well above the highest operative level of fluid in the device, and being of sufficient extent at its lower end to form a liquid seal in the liquid contents of the lower chamber, an automatic gas release conduit (130) having a vertical descending leg and an ascending leg, the ascending leg opening at its upper end into the return conduit at an elevation above the highest operative level of liquid in the device, the descending leg opening into the lower chamber, the gas release conduit assembly being oriented so that, in operation of the device, the direction of fluid flow entering from the lower chamber is downwards in the descending leg and upwards in the ascending leg, the device further comprising a secondary gas release conduit extending vertically from the gas retaining portion of the lower chamber and opening into the return conduit at an elevation well above the highest operative level of liquid in the device, an automatic valve device to enable gas tight shutoff and opening of the secondary gas release conduit, upon receipt of a signal from a level sensing device in the collection tank, a further tank (1313) at an elevation above the collection tank (1301), containing material (1315) with aerobic biofilm, a primary outlet conduit (1300) for conveying and discharging contents from the upper chamber to the tank containing aerobic biofilm, a secondary outlet conduit (1324) at a level below the floor of the collection tank for gravity overflow discharge of liquor from the secondary chamber, an automatic valve device (1311) in the secondary outlet conduit that can be operated by a remote signal, a timer device capable of activating the said automatic valve device in the secondary outlet conduit when, in operation of the device, the collection tank contains more than a predetermined quantity of waste for a predetermined length of time.

## Patentansprüche

1. Vorrichtung für die biologische Aufbereitung von Abwasser, welches biologisch abbaubare Feststoffe enthält, umfassend ein vertikal ausgerichtetes Gefäß (101), das von einer undurchlässigen Wand (103) in eine obere Kammer (104) und eine untere Kammer (102) unterteilt ist, wobei die Kammern jeweils mit einem Gasspeicherraum (123, 124) und einem Flüssigkeitsspeicherraum versehen sind; einen Stutzen (106), der eine fluidische Verbindung zwischen der unteren Kammer und dem Äußeren des Gefäßes zum Einbringen von Abwasser in das Gefäß herstellt; einen Stutzen (114), der eine fluidische Verbindung zwischen dem Flüssigkeitsspeicherraum der oberen Kammer und dem Äußeren des Gefäßes zum Ablassen von aufbereitetem Abwasser aus dem Gefäß herstellt; einen Stutzen (111) zum Ablassen von Gas aus dem Gasspeicherraum der oberen Klammer; eine Filterkammer (115) mit einem Einlass (118), der mit dem Flüssigkeitsspeicherteil in der unteren Kammer in fluidischer Verbindung steht, und einem Auslass (117), der mit dem Flüssigkeitsspeicherteil der oberen Kammer in fluidischer Verbindung steht; ein Filterbett (119), das in der Filterkammer angeordnet ist und deren inneres Volumen teilweise ausfüllt; eine Gasleitung (130), die eine fluidische Verbindung zwischen dem Gasspeicherraum in der unteren Kammer und dem Gasspeicherraum der oberen Kammer herstellt, und ein Ventil (502), das regelmäßiges Ablassen und Anhalten des Stroms von Gas durch die genannte Gasleitung ermöglicht.

2. Vorrichtung nach Anspruch 1, wobei die Filterkammer (115) mit ihrer Achse vertikal ausgerichtet ist und in dem genannten Gefäß enthalten ist.

3. Vorrichtung nach Anspruch 1, wobei eine oder mehrere Zwischenkammern zwischen der oberen Kammer und der unteren Kammer vorgesehen sind, wobei die Kammern untereinander angeordnet sind und jedes Paar benachbarter Kammern eine obere Kammer und eine untere Kammer nach Anspruch 1 bildet.

4. Vorrichtung nach Anspruch 3, weiter umfassend eine vertikal ausgerichtete Filterkammer (115, 115b, 115c), die die Trennwand zwischen jedem genannten Paar oberer und unterer Kammern durchdringt, um eine fluidische Verbindung zwischen solchen Kammern herzustellen.

5. Vorrichtung nach einem der vorhergehenden Ansprüche, wobei die genannte(n) Filterkammer(n) (115) mit porösen Stopfen an beiden Enden versehen sind, um das genannte Filtcrbctt in der Filterkammer zu halten, während freie Strömung von Fluid zugelassen wird.

6. Vorrichtung nach einem der Ansprüche 3 bis 5, wobei die genannte Gasleitung (130) für jedes benachbarte Paar Kammern eine fluidische Verbindung zwischen dem Gasspeicherraum der unteren Kammer und dem Gasspeicherraum der oberen Kammer herstellt.

7. Vorrichtung nach einem der vorhergehenden Ansprüche, weiter umfassend eine Ventilvorrichtung (502) in der bzw. jeder Gasleitung (130) zwischen der unteren Kammer und der oberen Kammer, ein Mittel (508) zum Erfassen des Flüssigkcitsstands in der bzw. jeder unteren Kammer und Aktivieren der Ventilvorrichtung zum Starten, Anhalten und Regeln des Gasstroms durch die Gasleitung.

8. Vorrichtung nach einem der vorhergehenden Ansprüche, wobei die bzw. jede Gasleitung weiter einen absteigenden Abschnitt in der unteren Kammer umfasst, durch den der Gasstrom im Betrieb der Vorrichtung abwärts verläuft, und einen aufsteigenden Abschnitt umfasst, durch den der Gasstrom im Betrieb der Vorrichtung aufwärts verläuft, wobei der Gasleitungseinlass (501) in der unteren Kammer oberhalb des Niveaus des Fluideinlasses (118) zu der genannten Filterkammer zwischen dieser Kammer und der Kammer unmittelbar darüber liegt, wobei der Gasleitungsauslass (111) in der oberen Kammer oberhalb von dem Betriebsniveau der Flüssigkeitsoberfläche (127) in der oberen Kammer liegt.

9. Vorrichtung nach einem der vorhergehenden Ansprüche, wobei die obere und die untere Kammer bzw. jedes Paar benachbarter Kammern weiter mit einer Flüssigkeitsrücklaufleitung (200), die den Flüssigkeitsspeicherraum der unteren Kammer mit dem Gasspeicherraum der oberen Kammer verbindet, und einer Gasleitung (130) zwischen der oberen und der unteren Kammer versehen sind, wobei der Auslass der Gasleitung in der oberen Kammer in die Flüssigkeitsrücklaufleitung öffnet.

10. Vorrichtung nach einem der vorhergehenden Ansprüche, weiter umfassend mindestens einen Stutzen (105) zum Einblasen von Gas in mindestens eine untere Kammer, eine Leitung (1208) für die Umwälzung von Gas, optional mit einer Pumpe (1211), von dem Gasspeicherraum einer beliebigen der Kammern zu dem genannten Stutzen zum Einblasen von Gas.

11. Vorrichtung nach einem der vorhergehenden Ansprüche, weiter umfassend eine Abdeckung oder ein Ablenkmittel (403) zum Umlenken von aufsteigenden Blasen von dem Einlass weg zur genannten Filterkammer.

12. Vorrichtung nach einem der vorhergehenden Ansprüche, weiter umfassend ein Mittel (401 - 404) zum Lenken des von der Filterkammer ausgehenden Stroms von Fluid zu dem unteren Teil der oberen Kammer.

13. Vorrichtung nach einem der vorhergehenden Ansprüche, weiter umfassend ein umgekehrtes im Wesentlichen kegelstumpfförmiges Ablenkmittel zum Lenken des von der Filterkammer ausgehenden Stroms von Fluid zu dem unteren Teil der oberen Kammer.

14. Vorrichtung nach einem der vorhergehenden Ansprüche, wobei die bzw. jede Filterkammer mit einer Erweiterung (401) in der oberen Kammer deutlich oberhalb der während des Betriebs der Vorrichtung in der oberen Kammer von Schlamm eingenommenen Region versehen ist, wobei an der genannten Erweiterung der Filterkammer Auslasslöcher (117) vorgesehen sind, wobei die genannte Erweiterung der genannten Filterkammer einen kleineren Durchmesser aufweist als der Hauptkörper der Filterkammer, wobei die Vorrichtung weiter ein Zylinderrohr-Ablenkmittel (403) umfasst, um aufsteigende Blasen von dem Auslass der Filterkammer weg umzulenken und einen Umwälzstrom in dem Flüssigkeitsinhalt der oberen Kammer hervorzurufen, der in der Nähe der Auslasslöcher der Filterkammer während des Betriebs der Vorrichtung nach unten gerichtet ist.

15. Vorrichtung nach einem der vorhergehenden Ansprüche, wobei die genannte bzw. jede Leitung (130), die eine fluidische Verbindung zwischen den Gasspeicherräumen in den oberen und unteren Kammern herstellt, über mindestens einen Teil ihrer Länge einen Innendurchmesser von zwischen 5 mm und 25 mm aufweist.

16. Vorrichtung nach einem der vorhergehenden Ansprüche, wobei der genannte Gasspeicherraum (124) in der genannten unteren Kammer einen wesentlichen Teil des Volumens der unteren Kammer ausmacht.

17. Vorrichtung nach einem der vorhergehenden Ansprüche, wobei die mindestens eine der genannten Kammern ein für die Biofilmbildung angepasstes Füllmedium (801) enthält.

18. Vorrichtung nach Anspruch 17, wobei die obere Kammer ein für die Biofi lmbildung angepasstes Füllmedium (801) enthält.

19. Vorrichtung nach einem der vorhergehenden Ansprüche, weiter umfassend ein Gas-Feststoff-Abscheidermittel (107), das an der oberen Kammer befestigt ist, um das Herauslösen von Gas, das Absetzen von Schlamm und das Überlaufen von geklärtem Wasser aus dem Gefäß zu erreichen.

20. Vorrichtung nach einem der vorhergehenden Ansprüche, wobei der Gasspeicherraum in der genannten oberen Kammer einen schwimmenden Gashalter umfasst.

21. Vorrichtung nach einem der vorhergehenden Ansprüche, weiter umfassend ein Mittel (105, 1208, 1211) zum Mischen des Inhalts der Kammem.

22. Vorrichtung nach einem der vorhergehenden Ansprüche für die Aufbereitung von hochkonzentriertem Abwasser umfassend einen Sammelbehälter (1301) zum Sammeln von hochkonzentriertem Abwasser und Schmutzwasser durch Schwerkraftfluss, einen Stutzen in dem Sammelbehälter zum Ablassen von Schmutzwasser, eine Niveauerfassungsvorrichtung in dem Sammelbehälter, eine Leitung (1306), die den Sammelbehälter auf einer Höhe unterhalb des Bodens des Sammelbehälters mit der unteren Kammer (102) verbindet, um das Fließen von hochkonzentriertem Abwasser durch Schwerkraft in die genannte untere Kammer zu ermöglichen, ein Einwegventil (1308) in der Zuführleitung, um den Rückstrom von Flüssigkeit aus der unteren Kammer in den Sammelbehälter zu verhindern, wobei sich mindestens ein Teil des Flüssigkeitsspeicherraums der oberen Kammer auf einer Höhe oberhalb der genannten unteren Kammer befindet, mindestens eine Filtereinbaukammer (115), die sich auf einer Höhe oberhalb des höchsten Betriebs-Flüssigkeitsniveaus in der Vorrichtung vertikal von der unteren Kammer nach außen erstreckt, einen gasdichten Deckel (1103) für die Filtereinbaukammer, eine Leitung (1108), die eine fluidische Verbindung zwischen der genannten Filtereinbaukammer (115) und der oberen Kammer (104) herstellt, mindestens ein Filtermodul (115) mit einem langgestreckten Gehäuse, das teilweise mit einem schwimmfähigen partikelförmigen Medium (119) gefüllt ist, wobei das Gehäuse an seinen beiden Enden Löcher aufweist, um den Strom von Fluid durch das Modul zu ermöglichen, aber das schwimmfähige partikelfömige Medium zurückzuhalten, mindestens ein Filtermodul, das mit einer fluidundurchlässigen Dichtung (1106) vertikal in der Filtereinbaukammer eingebaut ist, um die fluidische Verbindung zwischen der Filtereinbaukammer und der unteren Kammer mit Ausnahme durch das Filtermodul zu verhindern, wobei das Filtermodul eine derartige Länge aufweist, dass die Löcher an seinem unteren Ende während des Betriebs der Vorrichtung zu jeder Zeit in Flüssigkeit, welche in dem Flüssigkeitsspeicherteil der unteren Kammer (102) zurückgehalten wird, eingetaucht sind, so dass eine Flüssigkeitsabdichtung gebildet wird, um den Eintritt von Gas aus dem Gasspeicherraum zu verhindern, während die Flüssigkeitsverbindung von der unteren Kammer zu der oberen Kammer durch das Filtermodul hergestellt wird, eine Rücklaufleitung (200, 118), die sich vertikal von der unteren Kammer nach außen erstreckt, auf einer Höhe deutlich oberhalb des höchsten Betriebsniveaus von Fluid in der Vorrichtung endet und an ihrem unteren Ende ein ausreichendes Ausmaß aufweist, um eine Flüssigkeitsabdichtung in dem flüssigen Inhalt der unteren Kammer zu bilden, eine Leitung (130) für die automatische Gasfreisetzung mit einem vertikalen absteigenden Abschnitt und einem aufsteigenden Abschnitt, wobei der aufsteigende Abschnitt an seinem oberen Ende auf einer Höhe oberhalb des höchsten Betriebsniveaus von Flüssigkeit in der Vorrichtung in die Rücklaufleitung öffnet und der absteigende Abschnitt in die untere Kammer öffnet, wobei die Gasfreisetzungs-Leitungsbaugruppe derart ausgerichtet ist, dass im Betrieb der Vorrichtung die Richtung des aus der unteren Kammer eintretenden Fluidstroms im absteigenden Abschnitt abwärts und im aufsteigenden Abschnitt aufwärts ist, wobei die Vorrichtung weiter umfasst eine Sekundär-Gasfreisetzungsleitung, die sich vertikal von dem Gasspeicherabschnitt der unteren Kammer erstreckt und auf einer Höhe deutlich oberhalb des höchsten Betriebsniveaus von Flüssigkeit in der Vorrichtung in die Rücklaufleitung öffnet, eine automatische Ventilvorrichtung, um das gasdichte Absperren und Öffnen der Sekundär-Gasfreisetzungsleitung bei Empfang eines Signals von einer Niveauerfassungsvorrichtung in dem Sammelbehälter zu ennöglichen, einen weiteren Behälter (1313) auf einer Höhe oberhalb des Sammelbehälters (1301), der Material (1315) mit einem aeroben Biofilm enthält, eine Hauptauslassleitung (1300) zum Fördern und Ablassen von Inhalt aus der oberen Kammer in den aeroben Biofilm enthaltenden Behälter, eine Sekundärauslassleitung (1324) auf einer Höhe unterhalb des Bodens des Sammelbehälters zum Schwerkraftüberlaufablass von Klärwasser aus der Sekundärkammer, eine automatische Ventilvorrichtung (1311) in der Sekundärauslassleitung, die durch ein Fernsignal betätigt werden kann, eine Zeitsteuerungsvorrichtung, die in der Lage ist, die genannte automatische Ventilvorrichtung in der Sekundärauslassleitung zu aktivieren, wenn im Betrieb der Vorrichtung der Sammelbehälter während eines vorherbestimmten Zeitraums mehr als eine vorherbestimmte Menge an Schmutzwasser enthält.

## Revendications

1. Dispositif destiné au traitement biologique des eaux usées contenant des solides biodégradables comprenant :
un récipient (101) orienté verticalement divisé par une paroi imperméable (103) en une chambre supérieure (104) et en une chambre inférieure (102), chaque chambre comportant un espace de rétention de gaz (123, 124) et un espace de rétention de liquide ; une buse (106) établissant une communication fluidique entre la chambre inférieure et l'extérieur du récipient de façon à faire entrer les eaux usées dans le récipient ; une buse (114) établissant une communication fluidique entre l'espace de rétention de liquide de la chambre supérieure et l'extérieur du récipient de façon à évacuer du récipient les eaux usées qui ont été traitées ; une buse (111) pour évacuer le gaz de l'espace de rétention de gaz dans la chambre supérieure ; une chambre de filtration (115) dotée d'une entrée (118) en communication fluidique avec l'espace de rétention de liquide dans la chambre inférieure et d'une évacuation (117) en communication fluidique avec l'espace de rétention de liquide de la chambre supérieure ; un lit filtrant (119) placé à l'intérieur de la chambre de filtration et occupant partiellement son volume interne ; une conduite de gaz (130) établissant une communication fluidique entre l'espace de rétention de gaz dans la chambre inférieure et l'espace de rétention de gaz de la chambre supérieure ; et une soupape (502) permettant d'évacuer et d'interrompre périodiquement l'écoulement gazeux à travers ladite conduite de gaz.

2. Dispositif selon la revendication 1, dans lequel la chambre de filtration (115) est orientée avec son axe vertical et contenue à l'intérieur dudit récipient.

3. Dispositif selon la revendication 1, dans lequel une ou plusieurs chambres intermédiaires sont prévues entre la chambre supérieure et la chambre inférieure, les chambres étant agencées les unes au-dessous des autres et chaque paire de chambres adjacentes constituant une chambre supérieure et une chambre inférieure selon la revendication 1..

4. Dispositif selon la revendication 3, comprenant en outre une chambre de filtration (115, 115b, 115c) orientée verticalement traversant la cloison entre chaque dite paire de chambres supérieure et inférieure afin d'établir une communication fluidique entre ces chambres.

5. Dispositif selon l'une quelconque des revendications précédentes, dans lequel ladite/lesdites chambre(s) de filtration (115) sont dotées de bouchons poreux à leurs deux extrémités dans le but de retenir ledit lit filtrant à l'intérieur de la chambre de filtration tout en permettant au fluide de s'écouler librement.

6. Dispositif selon l'une quelconque des revendications 3 à 5, dans lequel, pour chaque paire de chambres voisines, ladite conduite de gaz (130) est en communication fluidique entre l'espace de rétention de gaz de la chambre inférieure et l'espace de rétention de gaz de la chambre supérieure.

7. Dispositif selon l'une quelconque des revendications précédentes, comprenant en outre un dispositif de soupape (502) dans la ou chaque dite conduite de gaz (130) entre la chambre inférieure et la chambre supérieure, des moyens (508) pour détecter le niveau de liquide dans la ou chaque chambre inférieure et pour actionner le dispositif de soupape afin de libérer, d'interrompre et de contrôler l'écoulement gazeux à travers la conduite de gaz.

8. Dispositif selon l'une quelconque des revendications précédentes, dans lequel la ou chaque conduite de gaz comprend en outre une tige descendante dans la chambre inférieure à travers laquelle descend l'écoulement gazeux lorsque le dispositif fonctionne et une tige ascendante à travers laquelle monte l'écoulement gazeux lorsque le dispositif fonctionné, l'entrée (501) de la conduite de gaz dans la chambre inférieure étant située au-dessus du niveau de l'entrée de fluide (118) jusqu'à ladite chambre de filtration entre cette chambre et la chambre immédiatement au-dessus, l'évacuation (111) de la conduite de gaz dans la chambre supérieure étant située au-dessus du niveau opérationnel (127) de la surface de liquide dans la chambre supérieure.

9. Dispositif selon l'une quelconque des revendications précédentes, dans lequel les chambres supérieure et inférieure, ou chaque paire de chambres voisines, sont en outre dotées d'une conduite de renvoi de liquide (200) raccordant l'espace de rétention de liquide de la chambre inférieure à l'espace de rétention de gaz de la chambre supérieure et d'une conduite de gaz (130) entre les chambres inférieure et supérieure, l'évacuation de la conduite de gaz dans la chambre supérieure débouchant dans la conduite de renvoi de liquide.

10. Dispositif selon l'une quelconque des revendications précédentes, comprenant en outre au moins une buse (105) pour injecter le gaz dans au moins une chambre inférieure, une conduite (1208) pour faire circuler le gaz, facultativement avec une pompe (1211), de l'espace de rétention de gaz d'une chambre quelconque jusqu'à ladite buse pour permettre l'injection de gaz.

11. Dispositif selon l'une quelconque des revendications précédentes, comprenant en outre un couvercle ou un déflecteur (403) permettant de dévier les bulles ascendantes de l'entrée vers ladite chambre de filtration.

12. Dispositif selon l'une quelconque des revendications précédentes, comprenant en outre des moyens (401-404) pour diriger l'écoulement de fluide provenant de la chambre de filtration vers la partie inférieure de la chambre supérieure.

13. Dispositif selon l'une quelconque des revendications précédentes, comprenant en outre un déflecteur inversé généralement tronconique pour diriger l'écoulement de fluide provenant de la chambre de filtration vers la partie inférieure de la chambre supérieure.

14. Dispositif selon l'une quelconque des revendications précédentes, dans lequel la ou chaque dite chambre de filtration est dolée d'une extension (401) dans la chambre supérieure bien au-dessus de la zone occupée par la boue dans la chambre supérieure lorsque le dispositif fonctionne, des perforations d'évacuation (117) étant prévues sur ladite extension de la chambre de filtration, ladite extension de ladite chambre de filtration ayant un diamètre inférieur à celui du corps principal de la chambre de filtration, le dispositif comprenant en outre un déflecteur tubulaire cylindrique (403) permettant de dévier les bulles ascendantes de l'évacuation de la chambre de filtration et d'induire un écoulement circulant dans le liquide contenu dans la chambre supérieure qui est dirigé vers le bas à proximité des perforations d'évacuation de la chambre de filtration lorsque le dispositif fonctionne.

15. Dispositif selon l'une quelconque des revendications précédentes, dans lequel ladite, la ou chaque conduite (130) établissant une communication fluidique entre les espaces de rétention de gaz des chambres supérieure et inférieure a un diamètre interne compris entre 5 mm et 25 mm sur au moins une partie de sa longueur.

16. Dispositif selon l'une quelconque des revendications précédentes, dans lequel ledit espace de rétention de gaz (124) dans ladite chambre inférieure représente une partie substantielle du volume de la chambre inférieure.

17. Dispositif selon l'une quelconque des revendications précédentes, dans lequel au moins l'une desdites chambres contient un milieu de garnissage (801) adapté à la formation d'un biofilm.

18. Dispositif selon la revendication 17, dans lequel la chambre supérieure contient un milieu de garnissage (801) adapté à la formation d'un biofilm.

19. Dispositif selon l'une quelconque des revendications précédentes, comprenant en outre des moyens de séparation gaz-solides (107) fixés à la chambre supérieure afin de permette le dégagement de gaz, le dépôt de la boue et le débordement de la liqueur clarifiée à partir du récipient.

20. Dispositif selon l'une quelconque des revendications précédentes, dans lequel l'espace de rétention de gaz dans ladite chambre supérieure comprend un gazomètre flottant.

21. Dispositif selon l'une quelconque des revendications précédentes, comprenant en outre des moyens (105, 1208, 1211) pour mélanger le contenu des chambres.

22. Dispositif selon l'une quelconque des revendications précédentes, destiné au traitement des eaux usées fortement chargées, comprenant un réservoir collecteur (1301) permettant de collecter par écoulement par gravité les eaux usées et déchets fortement chargés, une buse dans le réservoir collecteur pour évacuer les déchets, un dispositif détecteur de niveau dans le réservoir collecteur, une conduite (1306) raccordant le réservoir collecteur à la chambre inférieure (102) située au-dessous du fond du réservoir collecteur, pour permettre l'écoulement par gravité des eaux usées fortement chargées dans ladite chambre inférieure, un clapet anti-retour (1308) placé dans la conduite d'alimentation afin d'empêcher le reflux de liquide de la chambre inférieure dans le réservoir collecteur, au moins une partie de l'espace de rétention de liquide dans la chambre supérieure étant située au-dessus de ladite chambre inférieure, au moins une chambre de filtration (115) s'étendant verticalement de la chambre inférieure jusqu'à l'extérieur et située au-dessus du plus haut niveau opérationnel de liquide dans le dispositif, un couvercle hermétique aux gaz (1103) pour la chambre de filtration, une conduite (1108) établissant une communication fluidique entre ladite chambre de filtration (115) et la chambre supérieure (104), au moins un module filtrant (115) ayant un logement allogé partiellement rempli de milieu particulaire flottant (119), le logement étant perforé aux deux extrémités pour permettre au fluide de s'écouler à travers le module mais également de retenir le milieu particulaire flottant, au moins un module filtrant installé verticalement dans la chambre de filtration avec un joint imperméable aux fluides (1106) pour empêcher toute communication fluidique entre la chambre de filtration et la chambre inférieure, excepté à travers le module filtrant, le module filtrant ayant une longueur teille que les perforations au niveau de son extrémité inférieure sont en permanence immergées dans le liquide retenu dans la partie de rétention de liquide de la chambre inférieure (102) lorsque le dispositif fonctionne, ce qui forme un joint liquide pour empêcher l'entrée de gaz provenant de l'espace de rétention de gaz tout en établissant une communication fluidique de la chambre inférieure à la chambre supérieure au moyen du module filtrant, une conduite de renvoi (200, 118) s'étendant verticalement de la chambre inférieure à l'extérieur, débouchant bien au-dessus du plus haut niveau de fluide opérationnel dans le dispositif et suffisamment longue à son extrémité inférieure pour former un joint liquide dans le contenu liquide de la chambre inférieure, une conduite (130) de libération automatique de gaz ayant une tige descendante verticale et une tige ascendante verticale, la tige ascendante débouchant au niveau de son extrémité supérieure dans la conduite de renvoi au-dessus du plus haut niveau fonctionnel de liquide dans le dispositif, la tige descendante débouchant dans la chambre inférieure, l'ensemble de conduite de lisération de gaz étant orienté de manière que, lorsque le dispositif fonctionne, le sens d'écoulement du fluide entrant depuis la chambre inférieure est descendant dans la tige descendante et ascendant dans la tige ascendante, le dispositif comprenant en outre une conduite de libération de gaz secondaire s'étendant verticalement depuis la partie de rétention de gaz de la chambre inférieure et débouchant dans la conduite de renvoi bien au-dessus du plus haut niveau fonctionnel de liquide dans le dispositif, un dispositif de soupape automatique permettant une ouverture et une fermeture étanches aux gaz de la conduite de libération de gaz secondaire lorsqu'il reçoit un signal émis par un dispositif de détection de niveau dans le réservoir collecteur, un autre réservoir (1313) situé au-dessus du réservoir collecteur (1301), contenant des matières (1315) avec un biofilm aérobie, une conduite d'évacuation primaire (1300) poux acheminer et évacuer le contenu de la chambre supérieure jusqu'au réservoir contenant le biofilm aérobie, une conduite d'évacuation secondaire (1324) située au-dessous du fond du réservoir collecteur afin de permettre l'évacuation par débordement par gravité de la liqueur depuis la chambre secondaire, un dispositif de soupape automatique (1311) dans la conduite d'évacuation secondaire qui peut fonctionner à distance, un dispositif de minuterie capable d'actionner ledit dispositif de soupape automatique dans la conduite d'évacuation secondaire quand, lorsque le dispositif fonctionne, le réservoir collecteur contient plus qu'une quantité prédéterminée de déchets pendant un laps de temps prédéterminé.
